Europäisches Patentamt

European Patent Office

Office européen des brevets

(19)

(11) **EP 0 732 656 B1**

(12) **EUROPEAN PATENT SPECIFICATION**

(45) Date of publication and mention
of the grant of the patent:
**06.08.2003 Bulletin 2003/32**

(51) Int Cl.[7]: **G06F 12/08**

(21) Application number: **96108915.8**

(22) Date of filing: **21.02.1986**

(54) **Cache MMU system**

Anordnung von Cachespeicherverwaltungseinheiten

Système d'unités de gestion d'antémémoire

(84) Designated Contracting States:
**DE FR GB IT NL**

(30) Priority: **22.02.1985 US 704497**

(43) Date of publication of application:
**18.09.1996 Bulletin 1996/38**

(62) Document number(s) of the earlier application(s) in
accordance with Art. 76 EPC:
**86400363.7 / 0 196 244**

(73) Proprietor: **Intergraph Corporation
Huntsville, Alabama 35807-4201 (US)**

(72) Inventors:
• **Sachs, Howard Gene
Los Altos, California 94002 (US)**
• **Hollingsworth, Walter H.
Campbell, California 95008 (US)**
• **Cho, James Youngsae
Los Gatos, California 95030 (US)**

(74) Representative: **Sparing Röhl Henseler
Patentanwälte
Postfach 14 04 43
40074 Düsseldorf (DE)**

(56) References cited:
• **AFIPS CONFERENCE PROCEEDINGS,
NATIONAL COMPUTER CONFERENCE, 9 July
1984, LAS VEGAS,NEVADA, US, pages 41-50,
XP002012201 FRANK ET AL.: "Synapse tightly
coupled multiprocessors: A new approach to
solve old problems"**
• **IBM TECHNICAL DISCLOSURE BULLETIN, vol.
25, no. 1, June 1982, NEW YORK, US, pages
110-111, XP002012200 ANONYMOUS:
"Conditional Cache Miss Facility for Handling
Short/Long Cache Requests. June 1982."**
• **AFIPS CONFERENCE PROCEEDINGS
NATIONAL COMPUTER CONFERENCE, 9 July
1984, LAS VEGAS,NEVADA,US, pages 83-91,
XP000212101 PATEL: "An inside look at the
Z80000 CPU: Zilog's new 32-bit microprocessor"**
• **MINI MICRO CONFERENCE RECORD, 8
November 1983, SAN FRANCISCO,CA,US,
pages 13/3 1-6, XP002012199 CARTER: "A new
high performance microprocessor with Z80
software compatibility"**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

## EP 0 732 656 B1

**Description**

<u>Background of the Invention</u>

This invention relates to a computer system comprising a primary memory, a system bus, first and second data processing elements and a cache memory management means, and to a method of maintaining cache consistency in such a computer system.

Thus, this invention relates to computer system architectures and more particularly to a cache memory management system architecture having a high-speed system bus for coupling system elements coupled thereto for high speed communications thereamong, and having a very high speed microprocessor interface, a Direct Address Translation Unit, and an Address Translation Unit.

Prior cache memory controllers and memory management systems have been developed along a number of partition lines. Prior art systems have utilized a cache controller, a cache memory, a memory management unit, and translation logic, each as separate partitioned units of the system architecture. In these systems, a CPU which would output an address requesting corresponding data for that address, or preparing to like data to the address corresponding to the output address. A cache controller in conjunction with a separate cache memory and possibly in conjunction with separate memory tables would resolve whether or not the output address corresponded to locations stored within the cache memory. If so, a hit was declared, and the cache controller would coordinate the reading or writing of data to the cache memory via the cache controller. If the data was not present, the cache controller would issue a miss signal back to the CPU. In this case, the prior art systems could either provide for the CPU to coordinate a main memory access to obtain the requested address location data, or the CPU could issue a request to a memory management unit to provide the requested location data. In the case of memory management being utilized, prior art systems provided limited register storage either in the CPU, in the memory management unit, or in the main memory to assist in the translation process of virtual to physical address translation.

These prior art systems suffered from many drawbacks. First, due to the physical separation resulting from the partitioning, the overall data throughput rate was reduced because of bus loading, bus delays, and the multiple starting points for access via the cache controller, to the cache memory, or of a miss via the cache controller, cache memory, back to the CPU, to the memory management unit, and to main memory. Secondly, these systems burdened the CPU in the event of a cache miss. Additionally, in order to compensate for the cache controller circuitry in bus delays between the cache controller and cache memory, more expensive higher speed cache memories will require to obtain a cache access cycle time which is not delayed because of the cache controller and bus delay times.

<u>Summary</u>

The invention is defined in claims 1 and 10.

A cache and memory management system architecture and associated protocol is disclosed. The cache and memory management system is comprised of a two-way set associative memory cache subsystem, a two-way set associative translation logic memory subsystem, hardwired page translation, selectable access mode logic, and a selectively enablable instruction prefetch mode operational logic. The cache and memory management system includes a system interface and a processor/cache bus interface. The system interface provides means for coupling to a system bus to which a main memory is coupled. The processor/cache bus interface provides means for coupling to an external CPU. The cache memory management system can function as either an instruction cache or a data cache. The instruction cache system provides instruction prefetch and on-chip program counter capabilities. The data cache provides an address register for receiving addresses from the CPU, to provide for transfer of a defined number of words of data commencing at the address as stored in the address register.

Another novel disclosed feature is the quadword boundary registers, quad-word line registers, and quad-word boundary detector subsystem. This accelerates access of data within quad-word boundaries, and provides for effective prefetch of sequentially ascending locations of stored instructions or data from the cache memory subsystem.

The cache memory management system provides an integral architecture which provides the cache memory function, as well as providing two-way set associative translation of addresses from a virtual to a physical address, and page access protection facilities associated with the stored two-way set associative translation logic memory subsystem.

The cache memory management system provides selectable access modes. Thus, particular addresses can be defined by the CPU's system status word output which is coupled to the cache memory management systems to indicate various modes. These modes include mapped/unmapped, supervisors/users space access, etc. Additional features regarding the selectable access modes are defined by the page table entries which are loaded into the translation logic memory subsystem of the cache memory management system from the main memory page table at the time of loading of the cache memory subsystem with data from the page table in main memory. These page table defined selectable access modes include cacheable/non-cacheable, write-through/copy-back, etc.

An additional novel disclosed feature is a hardwired page translation system. This provides guaranteed access for critical system and user defined addresses. Examples include interrupt vector page, reserved pages for operating system and/or user applications, multiple I/O pages, and boot pages.

The cache memory management system each respond to I/O commands from the CPU received via the processor cache bus. These commands include:invalidate supervisors pages in the TLB translation logic memory subsystem; invalidate users page in the translation logic memory dsubsystem; reset dirty and referenced bits in the translation logic memory subsystem; access the entire translation logic memory subsystem; invalidate the entire cache memory subsystem; etc. In a multi-cache or multi-processor system architecture, the cache can be accessed from the system bus to invalidate a line in the cache memory subsystem on an I/O-write or on a shared-write. The cache returns dirty data to the system bus on an I/O-read.

The cache-memory management system can be configured as either an instruction or a data cache-memory management system. As disclosed, the system architecture includes a processor having separate instruction and data cache interfaces. A very high speed instruction bus couples to the instruction cache-memory management system from the processor instruction interface. A very high speed data bus couples the data cache memory management system to the processor data interface. Each cache memory management system couples to the system bus via the system interface and to main memory therefrom.

Where multiple elements are coupled to the system bus, a bus arbitration system element provides for system bus arbitration and collision avoidance management. A bus request/bus grant procedure and supporting architecture is disclosed for use in conjunction with the cache-memory management system.

Brief Description of the Drawings

These and other features and advantages of the present invention will become apparent from the following detailed description of the drawings, wherein:

FIG. 1 illustrates a block diagram of a microprocessor-based dual cache/dual bus system architecture in accordance with the present invention;
FIG. 2 is a block diagram of the instruction interface of FIG. 1;
FIG. 3 is a more detailed block diagram of the instruction decoder 120 of the instruction interface 100 of FIG. 2;
FIG. 4 is-an electrical diagram illustrating the instruction cache/processor bus, the data cache/processor bus, and the system bus dual bus/dual cache system of FIG. 1;
FIG. 5 illustrates the system bus to cache interface of FIG. 4 in greater detail;
FIG. 6 is an electrical diagram illustrating the drivers/receivers between the instruction cache-MMU and the system bus;
FIGS. 7A-C illustrate the virtual memory, real memory, and virtual address concepts as utilized with the present invention;
FIG. 8 illustrates an electrical block diagram of a cache memory management unit;
FIG. 9 is a detailed block diagram of the cache-memory management unit of FIG. 8;
FIGS. 10A-B illustrate the storage structure within the cache memory subsystem 320;
FIGS. 11A-B illustrate the TLB memory subsystem 350 storage structure in greater detail;
FIG. 12 illustrates the cache memory quad word boundary organization;
FIG. 13 illustrates the hardwired virtual to real translations provided by the TLB subsystem;
FIG. 14 illustrates the cache memory subsystem and affiliated cache-MMU architecture which support the quad word boundary utilizing line registers and line boundary registers;
FIG. 15 illustrates the load timing for the cache-MMU systems 120 and 130 of FIG. 1;
FIG. 16 illustrates the store operation for the cache-MMU systems 120 and 130 of FIG. 1, for storage from the CPU to the cache-MMU in copyback mode, and for storage from the CPU to the cache-MMU and the main memory for the write-through mode of operation;
FIGS. 17A-B illustrate the data flow of operations between the CPU and the cache-MMU and the main memory;
FIG. 18 illustrates the data flow and state flow interaction of the CPU, cache memory subsystem, and TLB memory subsystem;
FIG. 19 illustrates the data flow and operation of the DAT and TLB subsystems in performing address translation and data store and load operations;
FIG. 20 illustrates a block diagram of the cache-MMU system, including bus interface structures internal to the cache-MMU;
FIG. 21 is a more detailed electrical block diagram of FIG. 20; and
FIG. 22 is a detailed electrical block diagram of the control logic microengine 650 of FIG. 21.

Detailed Description of the Drawings

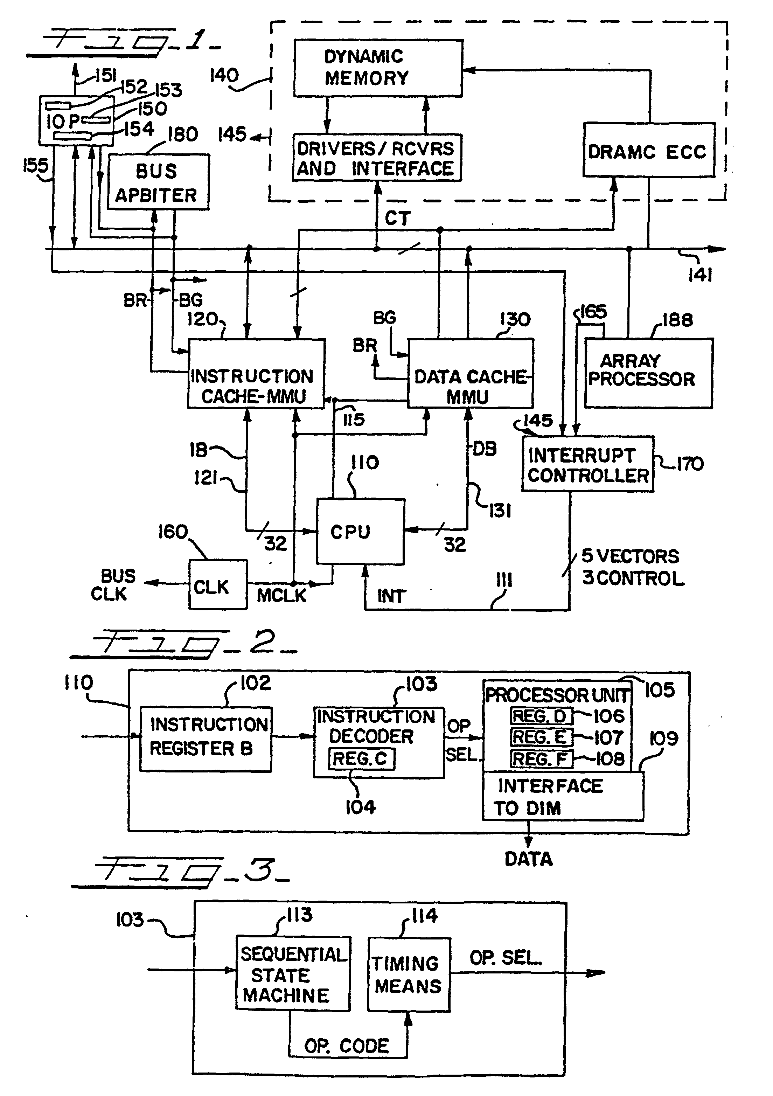

Referring to FIG. 1, a system embodiment of the present invention is illustrated. A central processing unit 110 is coupled via separate and independent very high-speed cache/processor buses, an instruction bus 121 and a data bus 131, coupling to an instruction cache-memory management unit 120 and a data cache-memory management unit 130, respectively. Additionally, a system status bus 115 is coupled from the CPU 110 to each of the instruction cache memory management unit 120 and data cache memory management unit 130. Each of the instruction cache memory management unit 120 and data cache memory management unit 130 has a separate interface for coupling to a system bus 141. A main memory 140 contains the primary core storage for the system, and may be comprised of dynamic RAM, static RAM, or other medium to high-speed read-write memory. The caches 120 and 130 each couple to the main memory 140 via the system bus 141.

Additionally, other systems elements can be coupled to the system bus 141, such as an I/O processing unit, IOP 150, which couples the system bus 141 to the I/O bus 151 for the respective IOP 150. The I/O bus 151 can either be a standard bus interface, such as Ethernet, Unibus, VMEbus, Multibus, or the I/O bus 151 can couple to the secondary storage or other peripheral devices, such as hard disks, floppy disks, printers, etc. Multiple IOPs can be coupled to the system bus 141. The IOP 150 can communicate with the main memory 140 via the system bus 141.

The CPU 110 is also coupled via interrupt lines 111 to an interrupt controller 170. Each of the units contending for interrupt priority to the CPU has separate interrupt lines coupled into the interrupt controller 170. As illustrated in FIG. 1, the main memory 140 has an interrupt output I1, 145, and the IOP 150 has an interrupt output 155 labelled I2. These interrupts I1, 145, and I2, 155, are coupled to the interrupt controller 170 which prioritizes and arbitrates priority of interrupt requests to the CPU 110. The CPU 110 can be comprised of multiple parallel CPUs, or may be a single CPU. In the event of multiple CPUs, prioritization and resolution of interrupt requests is handled by the interrupt controller 170 in conjunction with the signal control lines 111 from the CPU 110 to the interrupt controller 170.

A system clock 160 provides a master clock MCLK to the CPU 110 instruction cache-memory management unit 120 and data cache-memory management unit 130 for synchronizing internal operations therein and operations therebetween. In addition, a bus clock BCLK output from the system clock 160, provides bus synchronization signals for transfers via the system bus 141, and is coupled to all system elements coupled to the system bus 141. This includes the instruction cache-MMU 120, the data cache-MMU 130, the main memory 140, the IOP 150, and any other system elements which couple to the system bus 141. Where multiple devices request access to the system bus 141 at the same time, a bus arbitration unit 180 is coupled to the devices which are coupled to the system bus 141. The bus arbiter has separate couplings to each of the potential bus masters which couple to the system bus 141. The bus arbiter 180 utilizes a handshake scheme, and prioritizes access to the system bus 141. The bus arbitration unit 180 controls and avoids collisions on the system bus 141, and generally arbitrates use of the system bus 141.

The processor 110 includes cache interfaces providing mutually exclusive and independently operable dual-cache interface systems comprising an instruction interface coupled to bus 121 and a data interface coupled to bus 131. The instruction interface controls communications with the external instruction cache-MMU 120 and provides for the coupling of instructions from the instruction cache-MMU 120 to the processor 110. The data interface provides control of communications with the external data cache-MMU 130 and controls bi-directional communication of data between the processor 10 and the data cache-MMU 130. The execution unit of the processor is coupled to the instruction interface and the data interface ofs the processor. The execution unit provides for the selective processing of data received from the data cache-MMU responsive to decoding and executing a respective one or more of the instructions received from the instruction cache-MMU 120. The instruction interface couples to the instruction cache-MMU 120 via a very high-speed instruction cache-MMU bus 121. The data interface couples to the data cache-MMU 130 via a very high-speed data bus 131. The instruction interface and data interface provide the capability for very high speed transfer of instructions from the instruction cache-MMU 120 to the processor 110, and for simultaneous independent transfer of data between the data cache-MMU 130 and the processor 110.

The data cache-MMU 130 and instruction cache-MMU 120 each have a respective second bus interface for coupling to a main system bus 141 for coupling therefrom to a main memory 145, which is a very large, relatively slow memory. The system bus 141 is of moderately high-speed, but is slow relative to the data bus 131 or instruction bus 121. The system bus 141 also provides means for coupling of other circuits and peripheral devices into the microprocessor system architecture.

The instruction and data interface of the processor 110 provide necessary control, timing, and buffering logic to completely control the interface and data transfer process between the processor 110 and the respective caches 120 and 130. Similarly, the instruction cache-MMU 120 and data cache-MMU 130 have necessary control and buffering circuitry to allow for interface to the processor 110 via the respective instruction interface and data interface. The instruction cache-MMU 120 and data cache-MMU 130 also each have necessary control and buffering circuitry to provide for interface with and memory management of the main memory 140 via the system bus 141. Functionally, the instruction cache-MMU 120 and instruction interface provide a separate and independent subsystem from the data cache-MMU 130 and data interface. The instruction cache-MMU 120 accesses main memory 140 directly and independently from the data cache-MMU 130 operation , and vice versa.

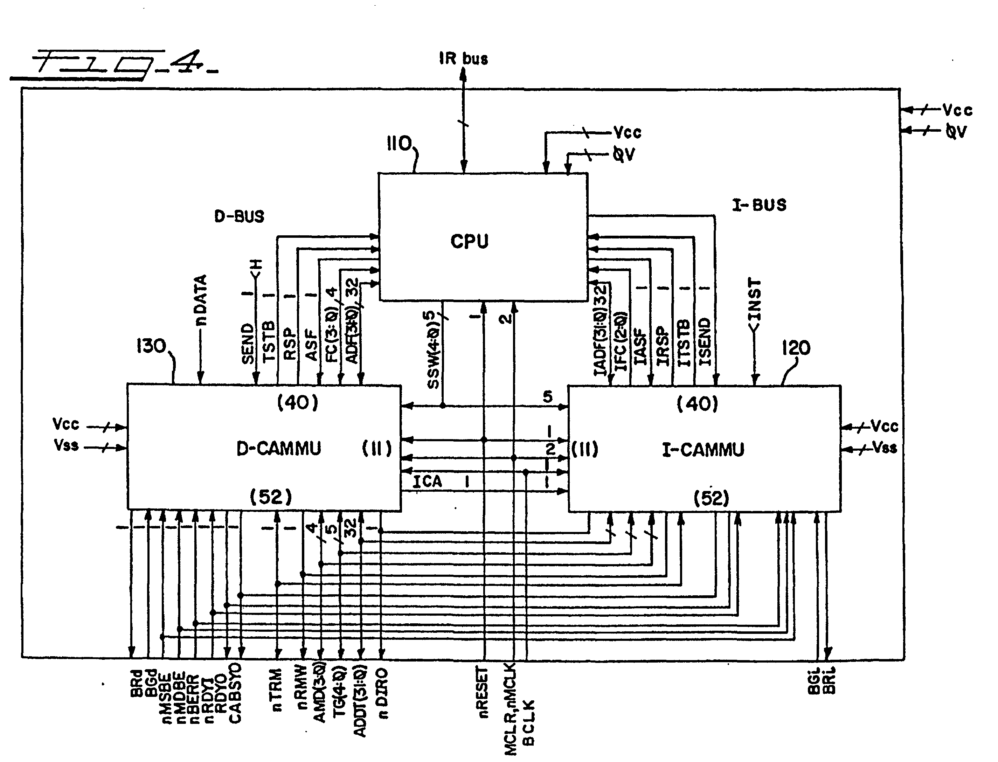

Referring to FIG. 2, the processor 110 of FIG. 1 is shown in further detail. As illustrated in FIG. 2, the processor 110 is further comprised of an instruction register 102, an instruction decoder 103 and an execution unit 105. The instruction register 102 provides means for storing and outputting instructions received from the instruction cache-MMU 120 via the instruction bus 121 and to the instruction interface of the processor 110. The output from the instruction register 102 is coupled to the instruction decoder 103. The instruction decoder 103 provides means for outputting operation selection signals responsive to decoding the instruction output received from the instruction register 102. The output operation selection signals from the instruction decoder 103 are coupled to the execution unit 105. The execution unit 105 provides means for processing selected data received from the data cache-MMU 130 via the data interface of the processor 110 and the data bus 131, responsive to the operation selection signals received from the instruction decoder 103.

In a preferred embodiment, the processor 110 provides for pipelined operation. As illustrated in FIG. 2, there are five stages of pipelined operations, the instruction register 102, stage C (104) in the instruction decoder 103 and stages D, (106) E, (107) F, (108) respectively, in the execution unit 105. Thus, multiple operations can be performed responsive to multiple instructions, concurrently.

In the illustrated embodiment of FIG. 2, the execution unit 105 is further comprised of an interface 109 which provides means for coupling the output resulting from the processing of the selected data to the data interface of the processor 110 for output of the resultant data therefrom to the data cache-MMU 130. The interface 109 provides for bi-directional coupling of data between the exeuction unit 105 and the data interface of the processor 110 and therefrom via the data bus 131 to the data cache-MMU 130.

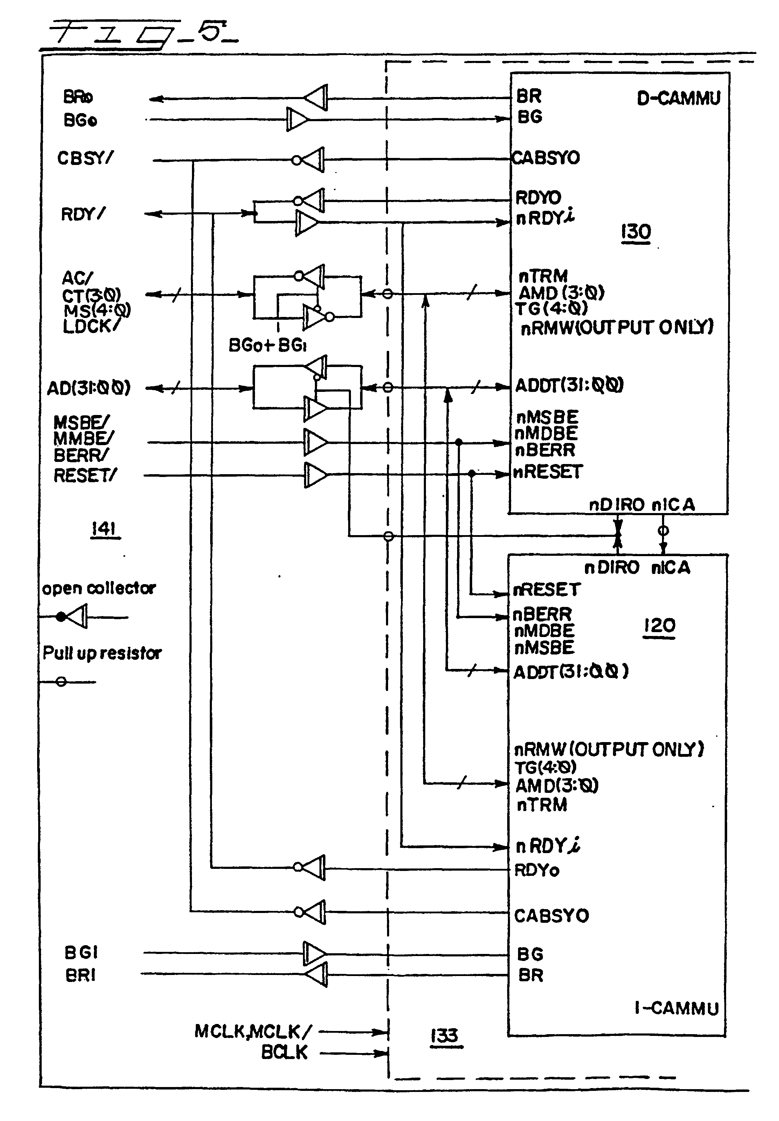

Referring to FIG. 3, the instruction decoder 103 of FIG. 2 is shown in greater detail illustrating one embodiment of an implementation of the instruction decoder 103. As illustrated in FIG. 3, the instruction decoder 103 is comprised of a sequential state machine 113 which decodes instructions received from the instruction register 102 and provides operation code signals responsive to the instruction output of the instruction register 102. The operational code signals from the sequential state machine 113 are coupled to a timing and control circuit 114 which provides means for outputting the operation selection signals to control the sequencing of instruction execution, for coupling to the execution unit 105, responsive to the operation code signals output from the sequential state machine 113.

In a preferred embodiment, each microprocessor is a single chip integrated circuit. However, multiple chip embodiments can also be utilized depending on design constraints.

The instruction interface of the processor 110 is further comprised of a multi-stage instruction buffer which provides means for storing, in seriatim, a plurality of instructions, one instruction per stage, and which further provides means for selectively outputting the stored instructions to the execution means 105. The cache advance signal is driven by the instruction interface as it has free space. The Cache ADVance controls the I-Cache-MMU accesses. Thus, the instruction interface provides a multi-stage instruction buffer for coupling and storing a plurality of instruction words as output in a serial stream from the instruction cache-MMU 120 via the instruction bus 121. This multi-stage instruction buffer provides for increasing instruction throughput rate, and can be utilized for pipelined operation of the processor 110. An external system clock 160 provides clock signals for synchronizing operations within and with the processor 110.

The instruction interface of the processor 110 is further comprised of address generator for selectively outputting an initial instruction address for storage in an instruction cache-MMU 120 program counter responsive to the occurrence of a context switch or branch in the operation of the microprocessor system. A context switch can include a trap, an interrupt, or any initialization of programs requiring initialization of the instruction cache 120 program counter to indicate a new starting point for a stream of instructions. The instruction interface provides a cache advance signal output whic provides for selectively incrementing the instruction cache-MMU program counter, except during a context switch or branch. Upon the occurrence of a context switch or branch, the instruction cache-MMU 120 program counter is loaded with a new value from the address generator of the instruction interface of the processor 110. A system clock 160, provides clock signals to the instruction interface of the microprocessor 110.

Upon initialization of the system, or during a context switch or branch, the instruction interface address generator of the processor 110 causes the loading of the instruction cache 120 program counter. Thereafter, when enabled by the cache advance signal, the instruction cache-MMU 120 causes a plurality of instructions (e.g. a quad word) to be output for coupling to the instruction interface of the processor 110. Instructions are sequentially output thereafter responsive to the output of the instruction cache-MMU 120 program counter, independent and exclusive of any further address output from the instruction interface of the processor 110 to the instruction cache-MMU 120.

As illustrated, the data interface of the processor 110 is further comprised of an address generator and interface which outputs a data address for coupling to the address register 505 of the external data cache-MMU 503. The MCLK of the system clock 160 is coupled to the data cache-MMU 130 for synchronizing transfer of data between the data cache-MMU 130 and the data interface of the processor 110. In a preferred embodiment, means are provided for coupling a defined number of data words between the data cache-MMU 503 and data interface 302 of the microprocessor 12 for each address output from the data interface 302 independent and exclusive of any intermediate address output from the address interface 324.

The instruction interface of the processor 110 and instruction cache-MMU 120 provide for continuous output of an instruction stream of non-predefined length from the instruction cache-MMU 120 to the instruction interface of the processor 110, responsive to only a single initial address output from the address generator of the instruction interface and an active cache advance signal output, continuing until a branch or context switch occurs.

The operation of the processor 110 data interface and the data cache-MMU 130 provides for transfer of one or more <u>defined</u> number of words of data therebetween for each address output from the processor 110 to the data cache-MMU. The first of such defined plurality of words is output responsive to the address from processor 110. The remaining words are transferred as soon as the system is ready. Upon completion of transfer of this defined number of words, a new address must be loaded into the address register of the data cache-MMU 130 from the processor 110. Every transfer of data between the data cache-MMU 130 and the data interface of the processor 110 requires the loading of a new address from the processor 110 data interface into the address register of the data cache-MMU 130. Although this transfer can be of one or multiple words, the number of words is fixed and defined at the start of the transfer, and each transfer requires a separate new address be loaded.

The main, or primary, memory 140 is coupled to a system bus 141 to which is also coupled the data cache-MMU 130 and instruction cache-MMU 120. The main memory 140 selectively stores and outputs digital information from an addressable read-write memory.

The instruction cache-MMU 120, coupled to the main memory 140 via the system bus 141, manages the selective access to the main memory 140 and provides for transfer of data from the read-write memory of the main memory 140 to the instruction cache-MMU 120 for storage in the very high-speed memory of the instruction cache-MMU 120. Additionally, the instruction cache-MMU 120 provides means for selectively providing the stored data from the addressable very high-speed instruction cache-MMU read-write memory for output to the processor 110.

The data cache-MMU 130 is coupled to the main memory 140 via the system bus 141, and manages the selective access to the main memory 140 for storage and retrieval of data between the main memory 140 and the data cache-MMU 130. The data cache-MMU 130 is further comprised of means for selectively storing and outputting data, from and to the processor 110 via the very high-speed data bus 131, or from and to the main memory 140 via the system bus 141. The data cache-MMU 130 provides selective storage and output of the data from its addressable very high-speed read-write memory.

The processor 110 is independently coupled to the instruction cache-MMU 120 via instruction bus 121 and to the data cache-MMU 130 via the data bus 131. The processor 110 processes data received from the data cache-MMU 130 responsive to decoding and executing respective ones of the instructions received from the instruction cache-MMU 120. Processing can be arithmetic, logical, relationally-based, etc.

As discussed above, the program counter of the instruction cache-MMU 120 is loaded with an address only during branches and context switches. Otherwise, the instruction cache-MMU operates in a continuous stream output mode. Thus, once the program counter of the instruction cache-MMU 120 is loaded with a starting address and the cache advance signal is activated, the respective addressed location's data is output from the instruction cache-MMU 120 memory to the processor 110, and subsequent instructions are transferred to the processor 110 in a stream, serially one instruction at a time. Each subsequent instruction word or group of instruction words is transferred without the need for any additional address transfer between the processor 110 to the instruction cache-MMU 120 program counter, except when a context switch or branch is required.

The MCLK is the clock to the entire main clock, (e.g. 33 MHz), logic. BCLK is the system bus clock, preferably at either 1/2 or 1/4 of the MCLK.

For the system bus 141 synchronization, BCLK is delivered to all the units on the system bus, i.e., CPU, IOPs, bus arbiter, caches, interrupt controllers, Mp and so forth. All signals must be generated onto the bus and be sampled on the rising edge of BCLK. The propagation delay of the signals must be within the one cycle of BCLK in order to guarantee the synchronous mode of bus operation. The phase relations between BCLK and MCLK are strictly specified. In one embodiment, BCLK is a 50% duty-cycle clock of twice or four times the cycle time of MCLK, which depends upon the physical size and loads of the system bus 141.

As illustrated, the transfer of instructions is from the instruction cache-MMU 120 to the processor 110. The transfer of data is bi-directional between the data cache-MMU 130 and processor 110. Interface between the instruction cache-MMU 120 and main memory 140 is of instructions from the main memory 140 to the instruction cache-MMU 120 responsive to the memory management unit of the instruction cache-MMU 120. This occurs whenever an instruction is required which is not resident in the cache memory of ICACHE-MMU 120. The transfer of data between the data cache-MMU 130 and main memory 140 is bi-directional. The memory management units of the instruction cache-MMU 120 and data cache-MMU 130 perform all memory management, protection, and virtual to physical address translation.

As illustrated, the processor 110 provides virtual address outputs which have an associatively mapped relationship to a corresponding physical address in main memory. The memory management units of the instruction and data cache-MMUs 120 and 130, respectively, are responsive to the respective virtual address outputs from the instruction and data interfaces of the processor 110, such that the memory management units selectively provide respective output of the associated mapped digital information for the respective virtually addressed location. When the requested information for the addressed location is not stored (i.e. a cache miss) in the respective cache-MMU memories, 120 and 130, the respective memory management unit of the cache-MMUs provides a translated physical address for output to the main memory 140. The corresponding information is thereafter coupled from the main memory 140 to the respective instruction cache-MMU 120 or to or from the data cache-MMU 130, and as needed to the processor 110.

As discussed herein, the system of FIG. 1 is comprised of a central processing unit 110, a single chip microprocessor in the preferred embodiment, which has separate instruction cache-MMU and data cache-MMU bus interfaces contained therein. The CPU 110 couples via a separate instruction bus 121 to instruction cache-MMU 120. The instruction bus 121 is a very high-speed bus, which, as discussed above, provides streams of instruction without processor intervention except during branches and context switches. The instruction bus 121 provides for very high-speed instruction communications, and provides means for communicating instructions at very high speed from the instruction cache-MMU 120 to the processor 110. The processor 110 is also coupled via a separate and independent high-speed data bus 131 to a data cache-MMU. The data bus 131 provides for very high-speed bi-directional communication of data between the processor 110 and the data cache-MMU 130.

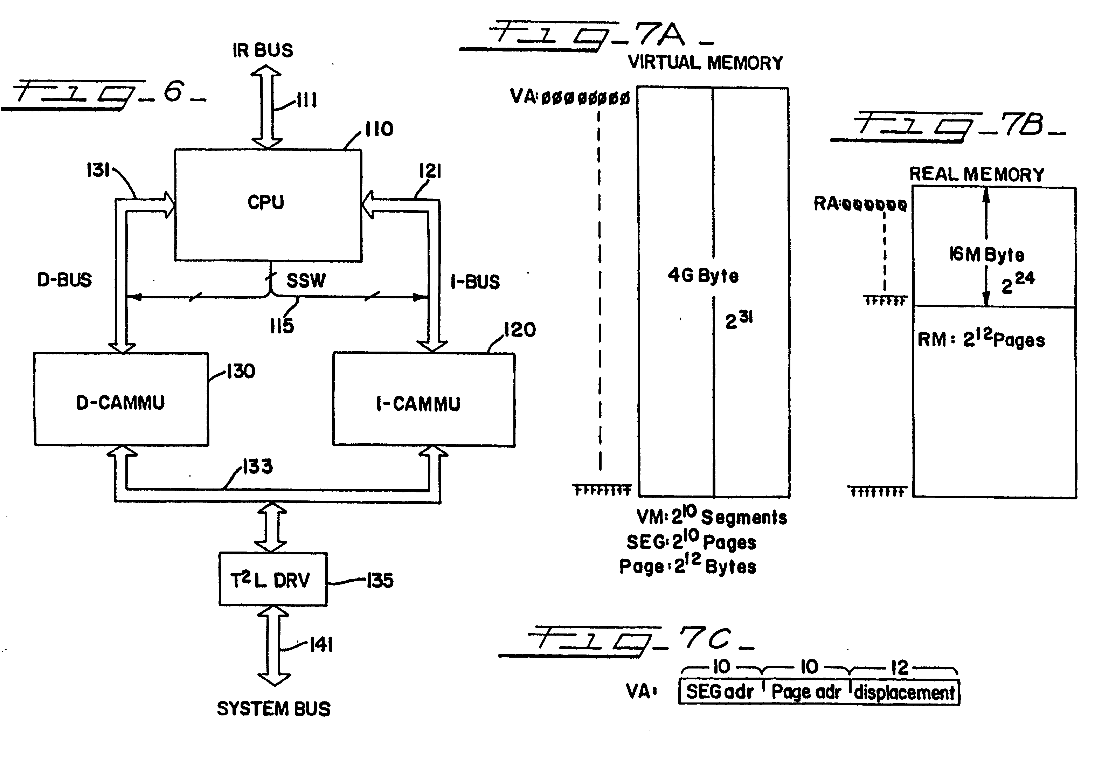

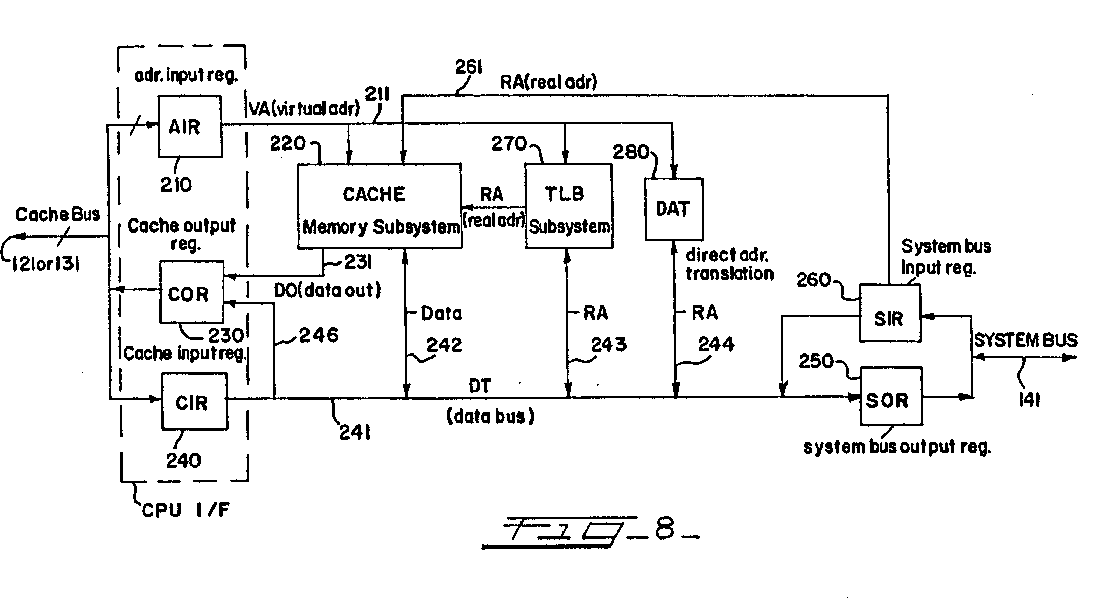

The two separate cache interface buses, the instruction bus 121 and the data bus 131 are each comprised of multiple signals. As illustrated in FIGS. 4 and 5, for one embodiment, the signals on and the data cache bus 131, the instruction cache bus 121 are as follows:

**** DATA CACHE BUS ****

ADF<31:0> : address/data bus

These lines are bi-directional and provide an address/data multiplexed bus. The CPU puts an address on these lines for memory references for one clock cycle. On store operations, the address is followed by the data. On load or TAS operations, these bus lines become idle (floating) after the address cycle, so that these lines are ready to receive data from the Data Cache-MMU. The Data Cache then puts the addressed data on the lines for a load or TAS operation.

| | |
|---|---|
| MPU0 : | SSW30, supervisor mode |
| MPK : | SSW29, protection key |
| MPUOU : | SSW28, selecting a user's data space on supervisor mode |
| MPKU : | SSW27, protection key of a user's data space on supervisor mode |
| MPM : | SSW26, virtual mapped |

These signals represent the System Status Word (SSW<30:26>) in the CPU and are provided to both the D-cache and I-cache.

FC<3:0> function code / trap code

The CPU puts "the type of data transfer" on FC<3:0> lines for one clock cycle at the address cycle. The D-CACHE, or I-CACHE, sends back "the type of trap" on abnormal operations along with TSTB.

```
Transfer type
- - - - - - - -
                On ASF Active)


FC < 3 2 1 0 >
        ---------
        0 0 0 0     load single-word mode
        0 0 0 1     load double-word mode
        0 0 1 0     load byte
        0 0 1 1     load half-word
        0 1 0 0     Test and set
        1 X 0 0     store single word
        1 X 0 1     store double word
        1 X 1 0     store byte
        1 X 1 1     store half-word
```

The D-cache puts the TRAP code on FC to respond to the CPU.

```
            Trap Code
            ----------------
                (on TSTB active)
            FC < 3 2 1 0 >


        ---------------
        X 0 0 0
        X 0 0 1         memory error (MSBE)
        X 0 1 0         memory error (MDBE)
        X 0 1 1
        X 1 0 0
        X 1 0 1         page fault
        X 1 1 0         protection fault (READ)
        X 1 1 1         protection fault (WRITE)
```

ASF : address strobe

ASF is activated by the CPU indicating that the 'address' and 'type of data transfer' are valid on ADF<31:10> and FC<3:0> lines, respectively. ASF is active half a clock cyle earlier than the address is on the ADF bus.

RSP : response signal

On load operations, the RSP signal is activated by the D-cache indicating that data is ready on the ADF bus. RSP is at the same timing as the data on the ADF bus. The D-cache sends data to CPU on a load operation, and accepts data from the CPU on a store operation.

On store operations, RSP is activated when the data cache-MMU becomes ready to accept the next operation. On load-double, RSP is sent back along with each data parcel transfer. On store-double, only one RSP is sent back after the second data parcel is accepted.

TSTB : TRAP strobe

TSTB, along with the trap code on FC<2:0>, is sent out by the D-cache indicating that an operation is abnormally terminated, and that the TRAP code is available on FC<2:0> lines. On an already-corrected error (MSBE), TSTB is followed by RSP after two clock intervals whereas on any FAULTS or on a non-correctable ERROR (MDBE), only TSTB is sent out.

nDATA : D-cache

Low on this line indicates that the data cache-MMU chip is connected to the DATA cache bus.

***** INST bus *****

IADF<31:0> : address/instruction bus

These lines are bi-directional, and form an address/instruction multiplexed bus. The CPU sends out a virtual or real address on these lines when it changes the flow of the program such as Branch, RETURN, Supervisor Call, etc., or when it changes SSW<30:26> value. The instruction cache-MMU-MMU returns instructions on these lines. MPU0, MPK, MPUOU, MPM : (refer to DATA cache bus description of these lines).

IFC<3:0> : function code/response code

The I-cache puts the TRAP code on the FC lines to respond to the CPU.

```
IFC (at ITSTB active)

        3 2 1 0

        ----------

        X 0 0 0
        X 0 0 1       memory error (MSBE)
        X 0 1 0       memory error (MDBE)
        X 0 1 1
        X 1 0 0
        X 1 0 1       page fault
        X 1 1 0       protection fault (execution)
        X 1 1 1
```

IASF : address strobe

IASF is activated by the CPU, indicating that the address is valid on IADF<31:0> lines. IASF is active half a clock cycle earlier than the address is on the IADF bus.

ISEND : send instruction (i.e. cache advance signal).

ISEND is activated by the CPU, indicating that the CPU is ready to accept the next instruction (e.g. the instruction buffer in CPU is not full).

At the trailing edge of RSP, ISEND must be off if the instruction buffer is full, otherwise the next instructions will be sent from the instruction cache-MMU. When the new address is generated, on Branch for example, ISEND must be off at least one clock cycle earlier than IASF becomes active.

IRSP : response signal

IRSP is activated by the I-cache, indicating an instruction is ready on the IADF<31:0> lines. IRSP is at the same timing as the data on the bus.

ITSTB : TRAP strobe

This is activated by the I-cache, indicating that the cache has abnormally terminated its operation, and that a TRAP code is available on IFC<3:0> lines. On an already-corrected error (MSBE), TSTB is followed by RSP after two clock intervals, whereas on FAULTS or a non-correctable ERROR (MDBE), only TSTB is sent out and becomes active.

INST : I-cache

A high on this line indicates that the cache is connected to the INST cache bus.

Each of the instruction cache-MMU 120 and data cache-MMU 130 has a second bus interface for coupling to the system bus 141. The system bus 141 communicates information between all elements coupled thereto. The bus clock signal BCLK of the system clock 160 provides for synchronization of transfers between the elements coupled to the system bus 141.

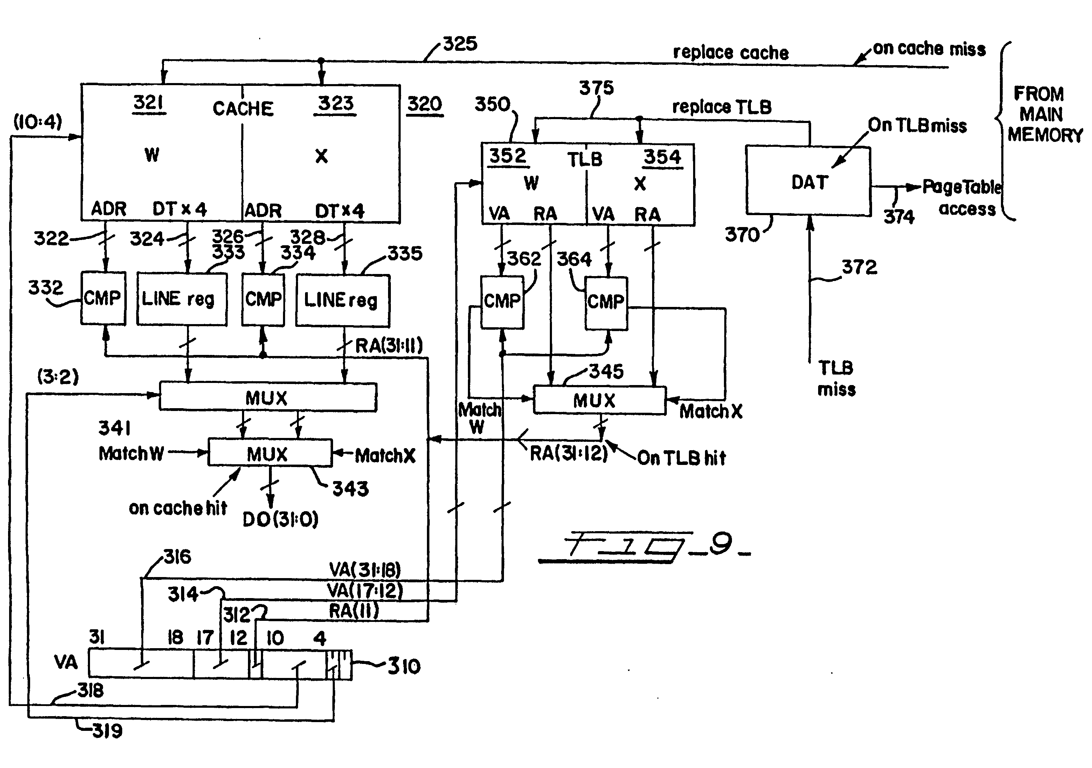

As shown in FIG. 6, the system bus output from the instruction cache-MMU 120 and data cache-MMU 130 are coupled to a common intermediate bus 133 which couples to TTL driver/buffer circuitry 135 for buffering and driving interface to and from the system bus 141. This is particularly useful where each of the instruction cache-MMU 120 and data cache-MMU 130 are monolithic single chip integrated circuits, and where it is desirable to isolate the bus drivers/receivers from the monolithic integrated circuits to protect the monolithic integrated circuits from bus interface hazards. The following bus signals coordinate bus driver/receiver activity:

DIRout : direction of the AD bus is outward

This signal is used to control off-chip drivers-receivers of the AD lines. The master cache activates this signal on generating the ADDRESS, and on sending out DATA on the write mode. The slave cache activates this signal on sending out the DATA on the read mode.

ICA/ : I-cache access

nICA is used only by the data and instruction caches and the CPU. This signal is sent from the D-cache to the paired I-cache for accessing the IO space in the I-cache. Upon the arrival of a memory-mapped IO access from the system bus, the I-cache accepts it as an I0 command only when the nICA is active. Thus, the caches accept IO commands only from the paired CPU.

Synchronous operation of the system bus 141 is made possible in the above described system environment so long as no signal change occurs at the moment it is sampled. Two timings are fundamental to realize this operation, one is for generating signals on the bus and the other is for sampling to detect signals. These two timings must be generated from the Bus Clock BCLK which has a certain phase relationship with the Master Clock MCLK, to maintain the certain relationship with internal logic operation. These timings must have a small skew from one unit to the other on the bus to satisfy the following equation.

$$Tg\text{-}s > Tpro + Tsk$$

where, Tg-s is the time period from the signal generating timing to the signal sampling timing, Tpro is the maximum propagation delay time of signals, and Tsk is the skew of the bus clock.

If the physical requirements of the system bus do not satisfy the above equation, the signals will arrive asynchronously with respect to the sampling timing. In this case, a synchronizer is required in the bus interface to synchronize the external asynchronous signals. Although the asynchronous operation does not restrict the physical size of the bus or any kinds of timing delay, a serious drawback exists in that it is extremely difficult to eliminate the possibility of a "synchronize fault". Another disadvantage of the asynchronous scheme is a speed limitation due to the handshake protocol which is mandatory in asynchronous schemes. This is especially inefficient in a multi-data transfer mode. Although a handshake scheme is a useful method of inter-communication between one source and one or more destinations, and although this is a safe way for data transfer operation, the timing protocol restricts the speed and is sometimes unsatisfactory in very fast bus operations. Additionally, an asynchronous bus is also sensitive to noise.

In the preferred embodiment, the system bus 141 has one clock: BCLK. The MCLK is used for internal logic operation of the CPU 110 and Caches 120 and 130, and BCLK is used to generate the synchronous timings of bus operation as described above.

The system bus can provide the combinations of handshake and non-handshake schemes compatibility.

In a preferred embodiment, the system bus 141 is a high speed, synchronous bus with multiple master capability. Each potential master can have separate interrupt lines coupled to an interrupt controller 170 coupled via control lines 111 to the processor 110. The system bus 141 has a multiplexed data/address path and allows single or multiple word block transfers. The bus is optimized to allow efficient CPU-cache operation. It has no explicit read/modify/write cycle but implements this by doing a read then write cycle without releasing the bus.

As an illustration of an exemplary embodiment of FIG. 1, the system includes a single CPU 110, an eight input fixed priority bus arbiter 180 and an interrupt controller 170. All signals are generated and sampled on a clock edge and should be stable for at least a set up time before the next clock edge and be held constant for at least a hold time after the clock edge to avoid indeterminate circuit operation. This means that there should be limitations placed on bus delays which will in turn limit bus length and loading.

The system bus 141 is comprised of a plurality of signals. For example, as illustrated in FIG. 5, for one embodiment, the system bus 141 can be comprised of the following signals, where "/" indicates a low true signal.

AD<31:0> : address/data bus

This is the multiplexed address/data bus. During a valid bus cycle, the bus master with the right of the bus puts an address on the bus. Then that bus master either puts data on the bus for a write, or three-states (floats) its AD bus outputs to a high impedance state to prepare to receive data during a read

CT<3:0> : CycleType

CT<3:2> indicates the type of master on the bus and whether a read or write cycle is occurring.

```
3  2
----
0  0    --------    CPU write (write issued by a
                    CPU type device

0  1    --------    CPU read (read issued by a CPU
                    type device)

1  0    --------    IO write (write issued by an
                    IOP type device)

1  1    --------    IO read (read issued by an IOP
                    type device)
```

CT(1:0) indicates the number of words to be transferred in the cycle.

```
CT<1:0>

------

0  0    --------    a single-word transfer

0  1    --------    a quad-word transfer

1  0    --------    a 16-word transfer

1  1    --------    Global CAMMU write
```

MS<4:0> : System Memory Space bits

The system MS bits specify the memory space to which the current access will occur and the code which indicates that the cache will perform an internal cycle. That cycle is required to either update a cache entry or to supply the data to the system bus if a cache has a more recent copy of the data.

```
MS  :  4  3  2

------------------------------------------------

        0  0  0    Main      Memory,      private
                   space.   Cache-able,   write
                   through.

        0  0  1    Main memory, shared space.
                   Cache-able, write through.

        0  1  0    Main     memory,      private
                   space,   Cache-able.    Copy
                   back.

        0  1  1    Main memory, shared space.
                   Not cache-able

        1  X  0    Memory-mapped   IO   space.
                   Not cache-able

        1  X  1    Boot  loader  space.     Not
                   cache-able
```

A transfer between a cache-MMU and a device in memory mapped space is by single or partial word only.
If the transfer is to memory mapped IO space, it will be of the single cycle type, that is, CT(1:0) are (00), then the lower two MS bits indicate the size of the referenced data:

```
MS (1:0)

---------

0  X    Whole word transfer

1  0    Byte transfer

1  1    1/2 word transfer
```

The byte or halfword transfered must appear on the bus bits pointed to by the data's address. For example, during a byte access to address FF03 (HEX), the desired data must appear on bus signals AD<23:16>, the third byte of the word. When a cache, 120 or 130, is accessed by a Shared-Write (i.e. a write into shared space in main memory 140) or IO write from the system bus, the hit line in the appropriate caches must be invalidated. When a cache is accessed by IO read from the system bus, the matched dirty data in the cache must be sent out.

Masters must only issue to the slave the type(s) of cycle(s) that the slave is capable of replying to, otherwise the bus will time out.

AC/ : ActiveCycle

This is asserted by the current bus master to indicate that a bus cycle is active.

RDY/ : ReaDY

RDY/ is issued by the addressed slave when it is ready to complete the required bus operation and has either taken the available data or has placed read data on the bus. RDY/ may not be asserted until CBSY/ becomes inactive. RDY/ may be negated between transfers on multiple word access cycles to allow for long access times. During multiple word read and write cycles, ReaDY/ must be asserted two clocks before the first word of the transfer is removed. If the next data is to be delayed, ReaDY/ must be negated on the clock after it is asserted. This signal is "wired-ORed" between devices that can behave as slaves.

CBSY/ : CacheBUSY

CBSY/ is issued by a cache when, due to a bus access, it is performing an internal cycle. The current controller of the bus and the addressed slave must not complete the cycle until CBSY has become false. This signal is "wire-ORed" between caches.tion. The CBSY/line is released only after the operation is over. On private-write mode, each slave cache keeps its CBSY/signal in a high impedance state.

MSBE/ : MemorySingleBitError

This is issued by main memory 140 after it has detected and corrected a single bit memory error. This will only go true when the data in error is true on the bus (i.e. if the third word of a four word transfer has had a corrected read error in this cycle, then during the time the third word is active on the bus (MMBE) will be true).

MMBE/ : MemoryMultipleBitError

This is issued by main memory when it detects a non-correctable memory error. This will only go true when the data in error is true on the bus (i.e. if the third word of a four word transfer has an uncorrectable read error in this cycle then during the time the third word is active on the bus MMBE will be true).

BERR/ : BusERRor

This is issued by the bus arbitration logic after it detects a bus time out condition or a bus parity error has been detected. The signal timed out timing is the period of BusGrant.

P<3:0> : Parity bits 3 through 0

These are the four parity bits for the four bytes on the AD<31:0> bus. Both address and data have parity checked on all cycles.

PERR/ : Parity ERRor

This is an open collector signal driven by each device's parity checker circuitry. It is asserted when a parity error is detected in either address or data. It is latched by the bus arbitration logic 180 which then generates a bus error sequence.

BRX : BusRequest

This is the bus request signal from device x to the bus arbiter 180.

BGX : BusGrant

This is the bus grant signal from the bus arbiter 180 to the device x.

LOCK :

This is generated during a Read/Modify/Write cycle. It has the same timing as the CT and MS signals.

MCLK : master clock

The master clock MCLK is delivered to the CPU or CPU's 110 and caches 120 and 130.

BCLK : BusClock

This is the system's bus clock. All signals are generated and sensed on its rising edge.

RESET/ :

This is the system's master reset signal. It is asserted for a large number of bus clock cycles.

RATE : BCLK/MCLK rate

Low :      BCLK has the frequency of 1/2 of the MCLK (e.g. 60ns).
High :      BCLK has the frequency of 1/4 of the MCLK (e.g. 120ns).

In one embodiment, the system architecture includes multiple cache memories, multiple processors, and IO processors. In this embodiment, there is a problem in keeping the same piece of data at the same value in every place it is stored and/or used. To alleviate this problem, the cache memories monitor the system bus, inspecting each cycle to see if it is of the type that could affect the consistency of data in the system. If it is, the cache performs an internal cycle to determine whether it has to purge its data or to supply the data to the system bus from the cache instead of from the addressed device on the bus. While the cache is deciding this, it asserts CacheBuSY/. When it has finished the cycle it negates CacheBuSY/. If it has the data, it places it on the bus and asserts ReaDY/.

The bus cycles that will cause the cache to do an internal cycle are:

1. An IO read (IOR) to private memory space. This allows the cache to supply data, which may have been modified but has not yet been written into memory. The MemorySpace code is <010xx>. That is , memory space is main memory, and the data required is cached in copy back mode into a private memory area. If, due to a programming error, a 16 word cycle is declared cache-able and a cache hit occurs, the cache will supply the first four words correctly and then supply the value of the forth word transferred to the remaining 12 words.

2. IO write cycles (IOW) of one, four or sixteen words. This allows the cache to invalidate any data that it (they) contain which is to be changed in memory. The MemorySpace codes are <001xx>, <001xx> and <010xx>. That is, purge any matching data that is cached.

3. Single and four word CPU writes to shared memory. This allows other caches to invalidate any data they contain that is being changed in memory. The MemorySpace code is <001xx>. That is, any matching data that is cache-able and in shared memory areas.

4. Global writes to the cache-memory management unit (CAMMU) control registers. In a multiple-CPU system, e. g. with multple cache pairs, an additional device is required to monitor the CBSY line and issue the RDY signal when CBSY is off in the Global mode.

5. Accesses from the data cache-memory management unit (DCAMMU) to its companion instruction cache-memory management unit (ICAMMU).

The following is an exemplary summary of bus transfer requirements which should be followed to successfully transfer data across the system bus. Other restrictions due to software conventions may also be necessary.

1. All activity occurs on the rising edge of BCLK.
2. All signals must meet all appropriate set up and hold times.
3. Masters must only issue those cycles to slaves that the slaves can perform. These are:

(i) MMIO and Boot accesses are single cycle only.
(ii) Sixteen word transfers to memory may only be issued as IO type cycles.

4. During cache-able cycles the bus slaves must not issue ReaDY/ until CacheBuSY/ has been negated. During not cache-able cycles, the addressed slave does not need to test for CacheBuSY/. If ReaDY/ is asserted when CacheBuSY/ is negated, the memory system must abort its cycle.

A typical system bus 141 cycle starts when a device requests bus mastership by asserting BusRequest to the bus arbiter 180. Some time later, the arbiter 180 returns BusGrant indicating that the requesting device may use the bus. On the next clock the device asserts ActiveCycle/, the bus address, the bus CycleType and the bus MemorySpace codes. The bus address is removed two BCLK's later. If the cycle is a write, then data is asserted on the AddressData lines. If it is a read cycle, the AddressData lines are three-stated in anticipation of data being placed on them. Then, one of the following will occur:

1. If the cycle involves a cache internal access, the cache (caches) will assert CacheBuSY/ until it (they) has (have) completed it's (their) internal operations. CacheBuSY/ asserted inhibits the main memory from completing its cycle. There are now several possible sequences that may occur:

i. If the cycle is an IO read to private memory and a cache has the most current data, the cache will simultaneously place the data on the system bus 141, assert ReaDY/ and negate CacheBuSY/. ReaDY/going true indicates to the memory 140 that it is to abort the current cycle.
ii. If the cycle is an IO write or a write to shared memory, the memory 140 waits for CacheBuSY/ to be negated and asserts ReaDY/.
iii. If the cycle is an IO read to private memory in main memory 140, and the cache doesn't have the data, CacheBuSY/ is eventually negated. This enables the memory 140 to assert the data on the bus 141 and assert ReaDY/.

2. If the cycle doesn't involve a cache access, CacheBuSY/need not be monitored.

ReaDY/ going true signals the master that the data has been transferred successfully. If a single word access, it indicates that the cycle is to end. ReaDY/stays true until one BCLK after ActiveCycle/ is dropped. If it's a read cycle, then data stays true for one BCLK longer than ActiveCycle/. For a write cycle, data is dropped with ActiveCycle/. BusRequest, MemorySpace and CycleType are also dropped with ActiveCycle/. BusRequest going false causes the bus arbiter 180 to drop BusGrant on the next BCLK, ending the cycle. ReaDY/ is dropped with BusGrant. If the cycle is a multi-word type then ReaDY/ going true indicates that further transfer will take place. The last transfer of a multiple word cycle appears identical to that of the corresponding single word cycle.
The Read/Modify/Write cycle is a read cycle and a write cycle without the bus arbitration occurring between them. The read data must be removed no later than the BCLK edge upon which the next ActiveCycle/ is asserted.
A BusError, BERR, signal is provided to enable the system bus 141 to be orderly cleared up after some bus fault condition. Since the length of the longest cycle is known (e.g. a sixteen word read or write), it is only required to time out BusGrant to provide sufficient protection. If, when a master, a device sees BusERRor it will immediately abort the cycle, drop BusRequest and get off the bus. BusGrant is dropped to the current master when BusERRor is dropped. Bus drive logic is designed to handle this condition. The address presented at the beginning of the last cycle that caused a bus time-out is stored in a register in the bus controller.
BERR is also generated when Parity ERRor/ goes true. If both a time out and Parity ERRor go true at the same time, time out takes precedence.
The main memory 140, as illustrated, is comprised of a read-write memory array error correction and drivers-receivers and bus interface circuitry which provide for bus coupling and interface protocol handling for transfers between the main memory 140 and the system bus 141. The main memory 140 memory error correction unit provides error detection and correction when reading from the storage of main memory 140. The error correction unit is coupled to the memory array storage of the main memory 140 and via the system bus 141 to the data cache-MMU 130 and instruction cache-MMU 120. Data being read from the memory 140 is processed for error correction by the error detection and correction unit.

The processor 110 provides addresses, in a manner as described above, to the instruction cache-MMU 120 and data cache-MMU 130 so as to indicate the starting location of data to be transferred. In the preferred embodiment, this address information is provided in a virtual or logical address format which corresponds via an associative mapping to a real or physical address in the main memory 140. The main memory 140 provides for the reading and writing of data from addressable locations within the main memory 140 responsive to physical addresses as coupled via the system bus 141.

The very high-speed memories of the instruction cache-MMU 120 and data cache-MMU 130 provide for the selective storage and output of digital information in a mapped associative manner from their respective addressable very high-speed memory. The instruction cache-MMU 120 includes memory management means for managing the selective access to the primary main memory 140 and performs the virtual to physical address mapping and translation, providing, when necessary, the physical address output to the system bus 141 and therefrom to the main memory 140. The data cache-MMU 130 also has a very high-speed mapped addressable memory responsive to virtual addresses as output from the processor 110. In a manner similar to the instruction cache-MMU, the data cache-MMU 130 has memory management means for managing the selective access to the main memory 140, the memory management means including virtual to physical address mapping and translation for providing, when necessary, a physical address output to the system bus 141 and therefrom to the primary memory 140 responsive to the virtual address output from the processor 110. The system bus 141 provides for high-speed communications coupled to the main memory 140, the instruction cache-MMU 120, the data cache-MMU 130, and other elements coupled thereto, communicating digital information therebetween.

The CPU 110 can simultaneously access the two cache-MMU's 120 and 130 through two very high speed cache buses, instruction cache/processor bus 121 and the data cache/processor bus 131. Each cache-MMU accesses the system bus 140 when there is a "miss" on a CPU access to the cache-MMU. The cache-MMU's essentially eliminate the speed discrepancy between CPU 110 execution time and the Main Memory 140 access time.

The I/O Interface Processing Unit (IOP) 150 is comprised of an IO adapter 152, an IO processor unit 153 and a local memory MIO 154, as shown in FIG. 1. The I/O interface 152 interfaces the system bus 141 and an external I/O bus 151 to which external I/O devices are connected. Different versions of I/O adapters 152 can be designed, such as to interface with secondary storage such as disks and tapes, and with different standard I/O buses such as VMEbus and MULTIbus, as well as with custom buses. The I/O processor unit 153 can be any kind of existing standard microprocessor, or can be a custom microprocessor or random logic. IO programs, including disk control programs, can reside on the MIO 154.

Data transfer modes on the system bus 141 are defined by the CT code via a CT bus. In the preferred embodiment, data cache-MMU 130 to Main Memory 140 (i.e. Mp) data transfers can be either in a quad-word mode (i.e. one address followed by four consecutive data words) or a single-word mode.

On I/O read/write operations, initiated by an IO processor, IOP 150, the block mode can be declared in addition to the single and quad modes described above. The block mode allows a 16-word consecutive data transfer to increase data transfer rate on the system bus 141. This is usually utilized only to 'write thru' pages on I0 read. On IO write, this can be declared to either 'write thru' or 'copy back' pages. When the IOP 150 initiates the data transfer from main memory 140 to the IOP 150 a cache may have to respond to the IOP's request, instead of the main memory 140 responding on a copy-back scheme, because it may not be the main memory 140 but the data cache 130 which has the most recently modified data. A special control signal is coupled to the caches 120, 130, and to main memory 140 (i.e. CBSY/ and RDY/ signals).

For a read-modify-write operation, the single-read operation is followed by a single-word write operation within one bus request cycle.

The main memory 140 can be comprised of multiple boards of memory connected to an intra-memory bus. The intra-memory bus is separated into a main memory address bus and a main memory data bus. All the data transfer modes as described above are supported.

Boot ROM is located in a special address space and can be connected directly to the system bus 141.

Referring again to FIG. 1, the processor 110 is also shown coupled to an interrupt controller 170 via interrupt vector and control lines 111. The interrupt controller 170 as shown is coupled to the main memory 140 via the interrupt lines 145, to the IOP 150, via the interrupt lines 155, and to the Array Processor 188 via interrupt lines 165. The interrupt controller 170 signals interrupts to the processor 110 via interrupt lines 111.

An interrupt controller 170 is coupled to the CPU 110 to respond to interrupt requests issued by bus master devices.

The CPU has a separate independent interrupt bus 111 which controls maskable interrupts and couples to the interrupt controller 170. Each level interrupt can be masked by the corresponding bit of an ISW (i.e. Interrupt Status Word) in the CPU. All the levels are vectored interrupts and have common request and acknowledge/enable lines.

The bus interrupt controller 170 enables several high level interrupt sources to interrupt the CPU 110. In one embodiment, the interrupt controller 170 is of the parallel, fixed priority type. Its protocol is similar to that of the system bus 141, and multiplex's the group and level over the same lines.

The interrupt controller 170 is coupled to each potential interrupting devices by the following signals:

IREQX/ : InterruptREQuest from device x

This signal is issued to the interrupt controller 170 by the interrupting device as a request for service.

IENX/ : InterruptENable to device x

This is issued by the interrupt controller 170 to the interrupting device to indcate that it has been granted interrupt service.

IBUS<4:0> : InterruptBUS

These five lines carry the interrupts group and level to the interrupt controller 170. This is a three state bus.

IREJ/ : InterruptREJect

This signal indicates to the interrupting device that the CPU 110 has refused to accept the interrupt in this group. This is connected to all interrupt devices.

The interrupt controller 170 is coupled to the CPU, or CPU's, 110 by the signal lines 111 as follows:

IR/ : CPU Interrupt Request

IR/ indicates the existence of a pending vectored interrupt, the level of which is available on the VCT<2:0> lines.

IAK/ : CPU Interrupt AcKnowledge

The CPU 110 sends out IAK/ to indicate that the interrupt is accepted, and at the same time reads the vector number through the VCT<4:0> lines. IAK/ and IR/configure a handshake scheme.

MK : MasKed response

Each CPU which is masking out the current interrupt returns an MK signal instead of an IAK/signal. The interrupt is not latched in the CPU in this case. MK can be used by the interrupt controller to release the masked interrupt and give way to a newly arrived higher level interrupt.

VCT<5:0> : level and vector code

VCT lines are multiplexed, and provide a level number and a vector number. A level number 0-7 is put on the VCT<2:0> lines when IR/ is active. When IAK/ is activated by the CPU, the VCT<4:0> lines have a vector number which identifies one of 32 interrupts of that level. The VCT lines couple outputs from the interrupt controller 170 to the CPU, or CPU's, 110.

The CPU 110 activates IAK/, and inputs the vector number, through IBUS<4:0> lines, that identifies one of 32 interrupts in each level. In a multi-processor environment, these levels can be used to let the system have a flexible interrupt scheme. As an example of the interrupt scheme in a multi-processor system, when all. the IREQx/ lines are activated, the CPU's enable bits in the ISW distinguish whether or not the CPU should accept the interrupt. Each level of interrupt thus has 32 interrupts and the level can be dynamically allocatable to any one of the CPUs by controlling the enable bits in SSW (i.e. system status word).

MK (masked) signals are activated, instead of IAK/, by the CPUs which are masking out the current interrupt. The interrupt is ignored (i.e. not latched) by those CPUs. These signals allow the interrupt controller 170 to reserve the masked interrupt and let a higher interrupt be processed if it occurs.

Beyond the elements as described above for FIG. 1, additional systems elements can be added to the architecture, and coupled via the system bus 141 into the system.

A bus arbiter 180 is coupled to the system bus 141 and to system elements coupled to the system bus 141, such as to the instruction cache-MMU 120 and data cache-MMU 130, for selectively resolving channel access conflicts between the multiple potential "master" elements coupled to the system bus 141. This maintains the integrity of communications on the system bus 141 and avoids collisions of data transfers thereupon. The bus arbiter 170 has bus request and bus grant inputs and outputs, respectively, coupled to each of the instruction cache-MMU 120, data cache-MMU 130, and to IOP 150. For example, if the instruction cache-MMU 120 requests a transfer of instruction data from the main memory 140 at the same time as the IOP 150 requests transfer of data to or from the IOP 150 relative to the main memory 140, the bus arbiter 180 is responsible for resolving the conflict so that the two events would happen in sequence, rather than allowing a conflict and collision to occur as a result of the simultaneous attempts.

The bus arbitration between bus masters is done by the bus arbiter 180. Each bus master activates its Bus Request BR line when it intends to access the system bus 141. The bus arbiter 180 returns a Bus Granted (BG) signal to the new master, which has always the highest priority at that time.

The bus master, having active BR and BG signals, is able to maintain the right of the bus by keeping its BR signal active until the data transfer is complete. Other masters will keep their BR signals active until its respective BG signal is activated in turn.

The system bus 141 is a shared resource, but only one unit can have the use of the bus at any one time. Since there are a number of potential "bus master" units coupled to the system bus 141, each of which could attempt to access the system bus 141 independently, the bus arbiter 180 is a necessary element to be coupled to the system bus 141.

There are, in general, two arbitration priority techniques: a fixed priority, and rotating or scheduled, priority. There are also two kinds of signal handling schemes: a serial (i.e. daisy-chained) and a parallel. The serial scheme when configured as a fixed priority system requires less circuitry than a parallel scheme, but is relatively slow in throughput speed. The combination of a serial scheme and a rotating priority can be provided by a high performance bus arbiter 180 The parallel scheme can be realized with either a fixed or a rotating priority, and is faster in speed than a serial or mixed scheme, but requires much more circuitry. The bus arbiter 180 of the present invention can utilize any of these schemes.

In an alternative embodiment, a rotating priority scheme can give every bus master an equal chance to use the system bus. However, where IOPs or one particular CPU should have higher priority, a fixed priority is usually preferable and simpler.

The bus arbiter 180 can also provide the function of checking for any long bus occupancy by any of the units on the system bus 141. This can be done by measuring the active time of a bus grant signal, BG. If the BG signal is too long in duration, a bus error signal, BERR, can be generated to the bus master currently occupying the system bus 141. BERR is also generated when Parity ERRor/ occurs.

As further illustrated in FIG. 1, an array processor 188 can be coupled to the system bus 141. Complex computational problems compatible with the array processor's capabilities can be downloaded to provide for parallel processing of the downloaded data, with the resultant answers being passed back via the system bus 141 (e.g. back to main memory 140 or to the data cache-MMU 130 and therefrom to the CPU for action thereupon).

As discussed above, the I/O Processing Unit (IOP) 150 couples to the system bus 141 and has means for coupling to an I/O bus 151, such as to a secondary storage disk or tape unit. The IOP 150 can provide for direct transfer of data to and from the main memory 140 and from and to the secondary storage device coupled to the IOP 150, and can effectuate said transfer independently of the instruction cache-MMU 120 and data cache-MMU 130. The IOP 150 can also be coupled as a "bus master" to the bus arbiter 180 to resolve conflicts for access to the main memory 140 via access to the system bus 141. This provides for flexibility. For example, data transferred between main memory 140 via the system bus 141 to the IOP 150 and therefrom to a secondary storage device can be controlled to provide a 16-way interleave, whereas transfers between a cache 120, or 130, and the main memory 140 can be controlled to provide a 4-way interleave. This is possible since the control of the transfers between the caches, 120 or 130, and main memory 140 is separate from the control for transfers between the IOP 150 and main memory 140.

The IOP 150 can alternatively or additionally provide for protocol conversion. In this embodiment, the protocol IOP 150 is coupled to the system bus 141, and is also coupled to an external I/O bus 151. Preferably, the IOP 150 is also coupled to the bus arbiter 180. The protocol conversion IOP 150 manages the interface access and protocol conversion of digital information between any of the system elements coupled to the system bus 141 and provides for transfer of the digital information via the external communications I/O bus 151 to the external system. Thus, for example, the system bus 141 architecture and transfer protocol can be made to interface with non-compatible system and bus structures and protocols, such as interfacing to a Multibus system.

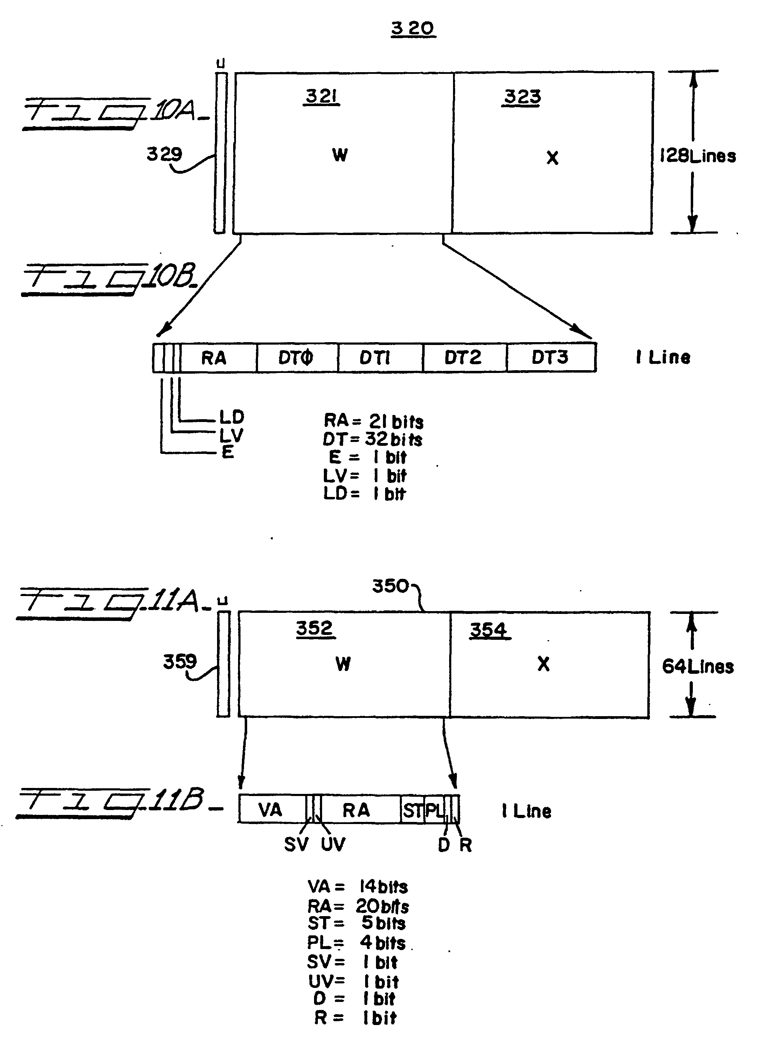

FIGS. 7A-C illustrate the virtual memory, real memory, and virtual address concepts, respectively. Referring to FIG. 7A, the virtual memory as seen by the CPU 110 is illustrated. The virtual memory is illustrated as comprising a $2^{32}$ word 32-bit memory array, binary addressable from 0 to FFF FFF FF (hexadecimal). This virtual memory can be visualized as comprising 1,024 ($2^{10}$) segments, each segment having 1,024 (i.e. $2^{10}$) pages, each page having 4,096 (i.e. $2^{12}$) words or bytes. Thus, the CPU can address a 4 gigabyte virtual memory space. This virtual memory address space is independent of the actual real memory space available. For example, the real memory (i.e. main memory) can be comprised of 16 megabytes, or $2^{12}$ pages.

As illustrated in FIG. 7B, real memory space is represented by a real address, RA, from 0 to FFF FFF (hexadecimal). The cache-memory management unit of the present invention provides very high speed virtual to real memory space address translation as needed. The cache-memory management unit provides a mapping for correlating the cache memory's contents and certain prestored information from virtual to real memory space addresses.

Referring to FIG. 7C, the 32-bit virtual address, VA, is comprised of a 10-bit segment address, bits 31 to 22 (i.e. VA<31:22>), a 10-bit page address, bits 21 to 12 (i.e. VA<21:12>), and a 12-bit displacement address, bits 11 to 0 (i.e. VA<11:0>). In a preferred embodiment, the cache-memory management unit provides set associative mapping, such that the displacement address bits 0 to 11 of the virtual address correspond to bits 0 to 11 of the real address. This provides certain advantages, and speeds the translation and mapping process.

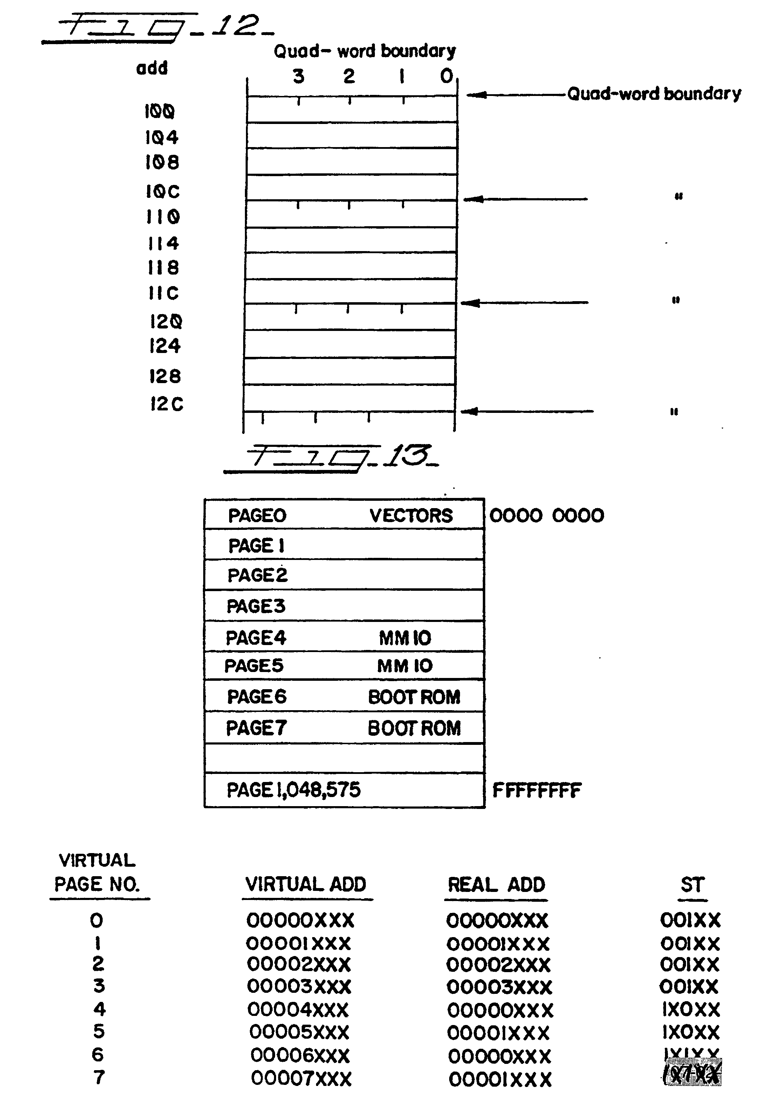

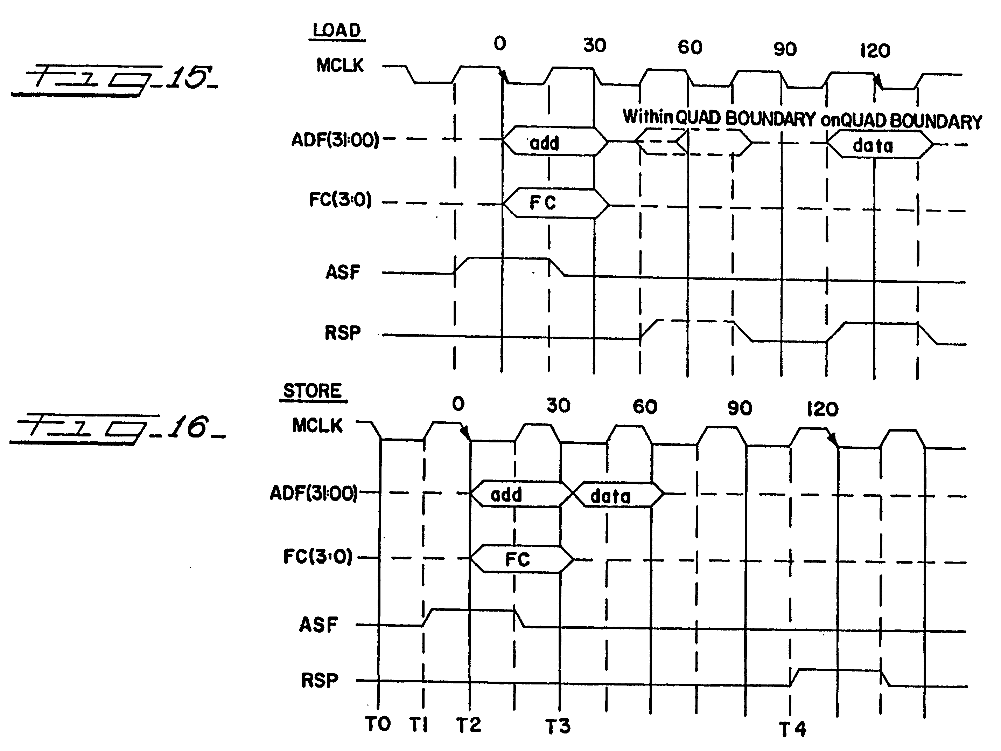

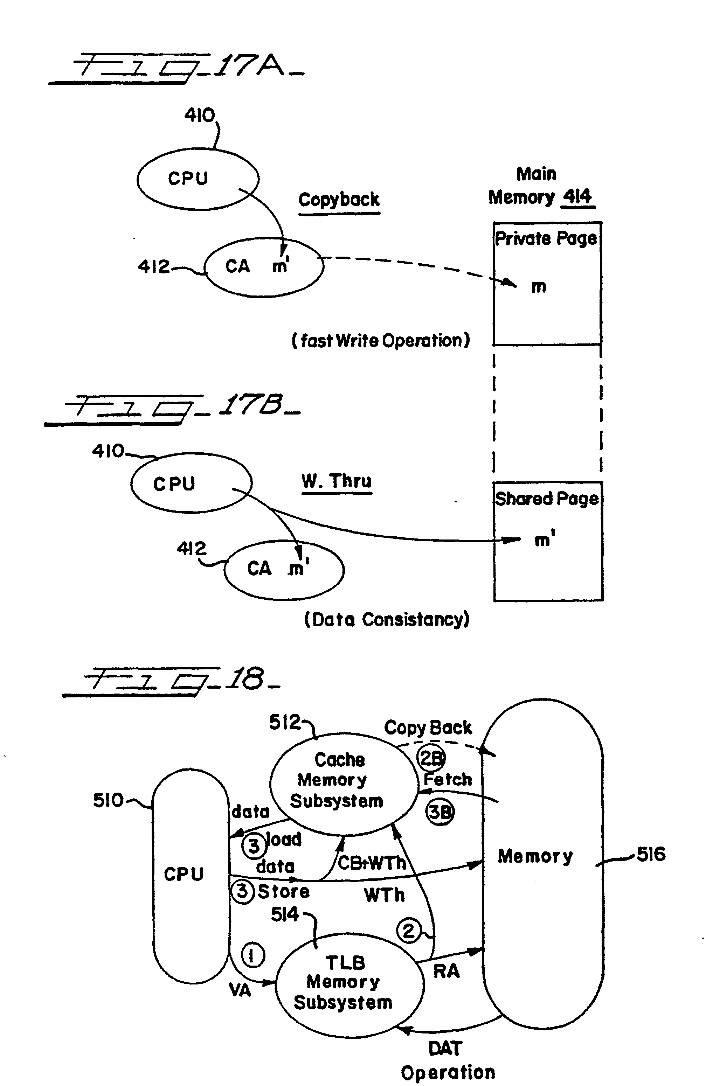

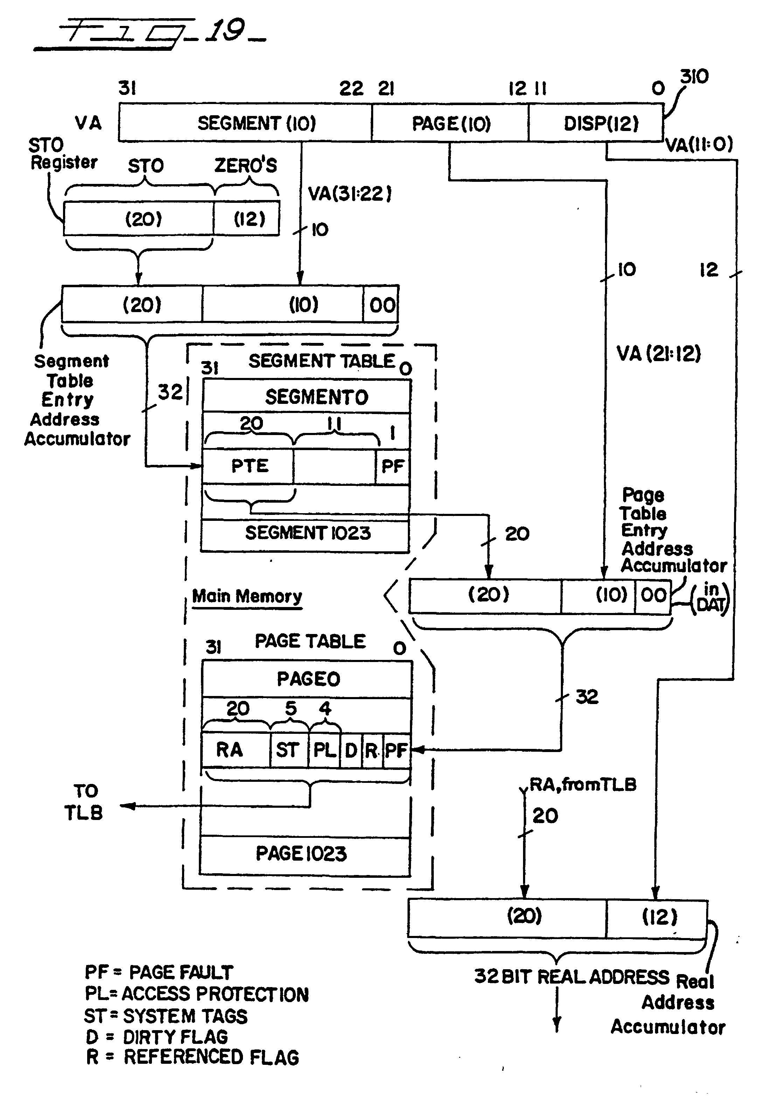

Referring to FIG. 8, a block diagram of the cache-memory management unit is illustrated. In a preferred embodiment, a single cache-memory management unit architecture can be utilized for either instruction or data cache purposes, selected by programming at time of manufacture or strapping or initialization procedures at the time of system configuration or initialization. The cache-memory management unit has a CPU interface coupling to the processor cache bus 121 or 131, and a system bus interface coupling to the system bus 141. The CPU interface is comprised of an address input register 210, a cache output register 230, and a cache input register 240. The system bus interface is comprised of a system bus input register 260 and a system bus output register 250. The address input register 210 couples the virtual address via bus 211 to a cache-memory system 220, a translation logic block (i.e. TLB) 270, and a direct address translation logic (i.e. DAT) unit 280. The DAT 280 and its operation are described in greater detail with reference to FIG. 12, hereafter. The data output from the cache memory system 220 is coupled via bus 231 to the cache output register 230. The cache memory system receives real address inputs via bus 261 from the system input register 260 and additionally receives a real address input from the TLB 270. Data input to the cache memory system 220 is via the cache data bus (i.e. DT) 241, which couples to each of the cache input register 240, the system bus input register 260, the system bus output register 250, cache output register 230, translation logic block 270, and DAT 280, for providing real address and data pass-through capabilities. The TLB 270 and DAT 280 are bidirectionally coupled to the DT bus 241 for coupling of real address and address translation data between the DT bus 241 and the TLB 270 and the DAT 280. The system bus interface can communicate with the DAT 280 and TLB 270 as well as with the cache memory system 220 via the DT bus 241.

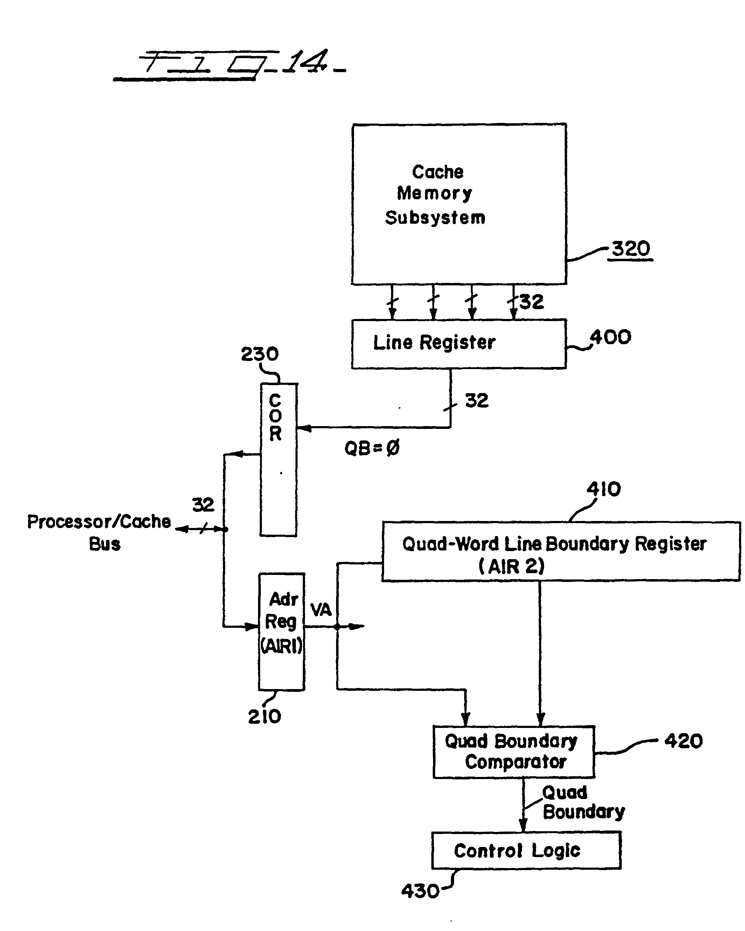

Referring to FIG. 9, a detailed block diagram of the cache-MMU is shown, illustrating the data flow operations internal cache-MMU.

The virtual address is taken from the fast cache bus, 121 or 131, via the cache input register 240, and is stored in an accumulator/register 310 of the cache-MMU. This address is then split into three parts. The high order bits (<31:>) are sent to the TLB 350 and DAT 370. Bits <10:4> are sent to the cache memory 320 buffer selection logic to selct a line therein. Bits <3:2> are sent to the multiplexer 341 which selects one of the four output words of the quadword line registers 333 and 335. Bits <0:1> are used only on store byte/store halfword operations, as described below.

The TLB 350 uses the low order 6 bits <17:12> of the virtual page address to access a two way set associative array 352 and 354 which has as its output the real address of the page corresponding to the virtual address presented. Bit <11> is passed through without translation. Since the page size is 4K, bit <11> is part of the specification f the byte within the page. Therefore, if a match is found, the real address is gated out and into the comparators 332 and 334 for comparison to the cache real address tag outputs 322 and 326.

If no match is found in the TLB 350, then the DAT (dynamic address translator) 370 is invoked. The DAT, by use of the segment and page tables for the active process, translates the virtual address presented to a real address. The real address is loaded into the TLB 350, replacing an earlier entry. The TLB 350 then sends the real address to the cache 320.

The cache data buffer 321 and 322 is a set associative memory, organized as 128 sets of two lines of 16 bytes each. Bits <10:4> of the virtual address select a set in the cache data buffer. The 16 bytes of data for each of the two lines in the set are gated out into the two quad-word registers in the cache logic.

The comparators 332 and 334 compare the real address (from the TLB) with both of the real address tags, 322 and 326, from the cache data buffer. If there is a match, then the appropriate word from the line matched is gated out to the COR 230. Bits <3:2> are used to select the appropriate word via multiplexer 341. If the valid bit for a line is off, there is no match.

For byte or half word loads, the cache-MMU provides the entire word, andthe CPU 110 selects the byte or halfword. For byte or half word stores, there is a more complex sequence of operations. The byte or half word from the CPU 110 is placed in the CIR 240, simultaneously, the cache reads out the word into which the byte(s) is being stored into the COR 230. The contents of the CIR 240 and COR 230 are then merged and are placed on the processor/cache bus.

If there is a miss (i.e. no match), then the real address is sent over the system bus 141 to main memory 140 and a 16 byte line is received in return. That 16 byte line and its associated tags replace a line in the cache data buffer 321 and 323. The specific word requested is then read from the cache-MMU.

The accumulator register 310 functions as the address register in the data cache-MMU and as the program counter in the instruction cache-MMU. The function as either an instruction cache-MMU or a data cache-MMU is being determined by initialization of the system or by hardwired strapping. For a monolithic integrated circuit cache-MMU embodiment, this decision can be made at time of final packaging (e.g. such as by strapping a particular pin to a voltage or to ground or by laser or ion implant procedures). Alternatively, it can be programmed as part of the initialization of the chip by the system (e.g. by loading values per an initialization protocol onto the chip). The register-accumulator 310 stores the address output from the CPU 110. As described before, this address is 32 bits in length, bits 0 to 31.

The cache memory sub-system 320 is divided into two equal halves labelled "W, 321", and "X", 323". Each half is identical and stores multiple words of data, the real address for that data, and certain control information in flag bits. The internal structure of the cache is described in greater detail with reference to FIG. 10. Each half of the cache, W and X, provide address outputs and multiple words of data output therefrom, via lines 322 and 324 for address and data output from the W cache half 321, and address and data outputs 326 and 328 from the X cache half 323.

In the preferred embodiment, the data output is in the form of quad-words output simultaneously in parallel. Ths is complimentary to the storage structure of four words in each half, W and X, of the cache for each line in the cache half, as illustrated in FIG. 10. The quad-word outputs from the two halves, W and X, of the cache, respectively, are coupled to quad-word line registers 333 and 335, respectively. The number of words in the line registers corresponds to the number of words stored per line in each half of the cache. The address outputs from each half of the cache, W and X, 321 and 323, respectively, are coupled to one input each of comparators 332 and 334, respectively. The other input of each comparator 332 and 334 is coupled to the output of a multiplexer 347 which provides a real address, bits 31 to 11, output. The real address, bits 31 to 11, are compared via the comparators 332 and 334, respectively, to the outputs of the address interface from each of the cache halves W, 321, and X, 323, respectively, to determine whether or not the requested address corresponds to the addresses present in the cache 320. The accumulator 310 provides an output of bits 10 to 4 to the cache memory subsystem, so as to select one line therein. The real address stored in that line for each half, W and X, of the cache memory 320 is output from the respective half via its respective address output line, 322 and 326, to its respective comparator, 332 and 335. The outputs from each of the line registers 333 and 335 are coupled to the multiplexer 341. The accumulator-register 310 provides output of bits 3 and 2 to select one of four consecutive words from the quad-word storage line registers 333 and 335.

The selected word from each of the line registers are outputs from multiplexer 341 to to multiplexer 343. The selection of which line register, i.e. 333 or 335, output is to be output from multiplexer 343 is determined responsive to the match/no match outputs or comparators 332 and 334. The multiplexer 343 couples the data out bits 31 to 0 to the processor cache bus, via the cache output register 230 of FIG. 4. The match/no-match signals output from comparators 332 and 334 indicate a cache hit [i.e. that is that the requested real address was present in the cache and that the data was valid] or a cache miss [i.e. requested data not present in the cache] for the respective corresponding half of the cache, W (321) or X (323). The real address bits 31 to 11, which are coupled to the comparators 332 and 334 from the multiplexer 337, is constructed by a concatenation process illustrated at 348. The register accumulator 310 output bit 11 corresponding in the set associative mapping to the real address bit 11 is concatenated, with the real address output bits 31 to 12 from the multiplexer 345 of the TLB 270.

The TLB 270 of FIG. 8 is shown in greater detail in FIG. 9, as comprising a translation logic block storage memory 350 comprising a W half 352 and an identical X half 354, each having multiple lines of storage, each line comprising a virtual address, flag status bits, a real address. Each half provides a virtual address output and a real address output. The virtual address output from the W half of the TLB 352 is coupled to comparator 362. The virtual address output of the X half 354 is coupled to comparator 364. The other input to the comparators 362 and 364 is coupled in common to the register accumulator 310 output bits 31 to 18. A line is selected in the TLB responsive to the register accumulator 310's output bits 17 to 12, which select one of the lines in the TLB as the active selected line. The virtual address output from the TLB W and X halves, 352 and 354 respectively, corresponds to selected line. The "match" output lines from comparators 362 and 364 are each coupled to select inputs of a multiplexer 345 which provides a real address output of bits 31 to 12 to the concatenation logic 348 for selective passage to the multiplexer 347, etc. The real address outputs for the selected line (i.e. for both halves) of the TLB 350 are coupled to the multiplexer 345. On a TLB hit, where there is a match on one of the halves, W or X, of the TLB, the corresponding comparator provides a match signal to the multiplexer 345 to select the real address for the half of the TLB having the match of the virtual addresses to provide its real address output from the multiplexer 345 to the concatenation logic 348. In the event of a TLB miss, a TLB miss signal 372 is coupled to the direct address translation unit 370. The DAT 370 provides page table access as illustrated at 374, and provides replacement of TLB lines as illustrated at 375. The operation of the DAT will be described in greater detail later herein. On a cache miss, the requested addressed data is replaced within the cache as indicated via line 325.

Referring to FIG. 10A, the organization of the cache memory system is illustrated. The cache memory system 320 is comprised of three fields, a Used bit field, and two identical high speed read-write memory fields, W and X. The first field 329 is comprised of a Used "U" bit memory, indicating whether the W or X half was the most recently used half for the addressed line of cache memory 320. The W and X memories each contain multiple lines (e.g. 128 lines). The U-memory field 329 has the same number of lines (e.g. 128 lines). The storage arrays W and X of cache memory subsystem 320 can be expanded to multiple planes (i.e. more than two equal blocks), with the size of the U-memory word correspondingly changed.

Each line in each cache memory subsystem half, W and X respectively, contains multiple fields, as shown in FIG. 10B. Each line in the W or X subsystem memory contains an enable bit "E", a line valid bit "LV", a line dirty bit "LD", a real address field "RA", and multiple data words "DT". The enable bit set indicates that the respective associated line is functional. A reset enable bit indicates that the respective associated line is not operational. A reset enable bit results in a cache miss for attempted accesses to that line. For monolithic integrated circuit cache-MMU's, the enable bit can be laser set after final test as part of the manufacturing process. The line valid bit LV indicates whether or not to invalidate the entire current line on a cold start, I/O Write, or under processor command. The line dirty bit LD indicates whether the respective associated current line of the cache memory subsystem has been altered by the processor (i. e. main memory is not current). The real address field, illustrated as 21 bits, comprises the most significant 20 bits for the real address in main memory of the first stored data word which follows. The multiple data words, illustrated as four words DT0 to DT4, are accessed by the processor instead of main memory. Each data word contains multiple bits, e.g. 32 bits.

As illustrated in FIG. 11A, the TLB subsystem 350 is comprised of three fields, a Used "U" field 359, and dual high speed read-write memory fields, W and X memory subsystem. The W and X memory subsystems are equivalents forming two halves of the cache memory storage. As illustrated, each half contains 64 lines of addressable storage having 47-bit wide words, and supports the virtual to real address translation. The Used field of each line performs in a manner similar to that which is described with reference to FIG. 10A.

As illustrated in FIG. 11B, each storage line in W and X is comprised of a 14 bit virtual address "VA" field, a 20 bit real address "RA" field, a supervisor valid bit field, a user valid bit UV field, a dirty bit "D" field, a referenced bit "R", a protection level word "PL" field, illustrated as four bits, and a system tag "ST" field, illustrated as five bits.

The TLB is a type of content addressable memory which can be read within one MCLK cycle. It is organized as a set associative buffer and consists of 64 sets of two elements each. The low order 6 bits of the virtual page address are used to select a set, i.e. a line of storage. Then, the upper 14 bits of the virtual address are compared (i.e. 362 and 364) to the key field VA output of both elements 352 and 354 of the set. On a TLB hit, the real address field (20 bits) RA of the TLB line entry which matches is output via multiplexer 345, along with the associated system tags and access protection bits. A TLB translation search is provided responsive to 14 bits of virtual address, supervisor valid and user valid.

As illustrated in FIG. 12, the cache memory is organized on a quad word boundary. Four addressable words of real address memory are stored in each line for each half (i.e. W and X) of the cache memory system 320. The cache memory subsystem provides quad-word output on the quad-word boundaries to further accelerate cache access time. For example, on a load operation, when the current address is within the quad boundary of the previous address, then the cache access time is minimal [e.g. two clock clycles]. When the current address is beyond the quad boundary of the previous address, the cache access time is longer [e.g. four clock cycles].

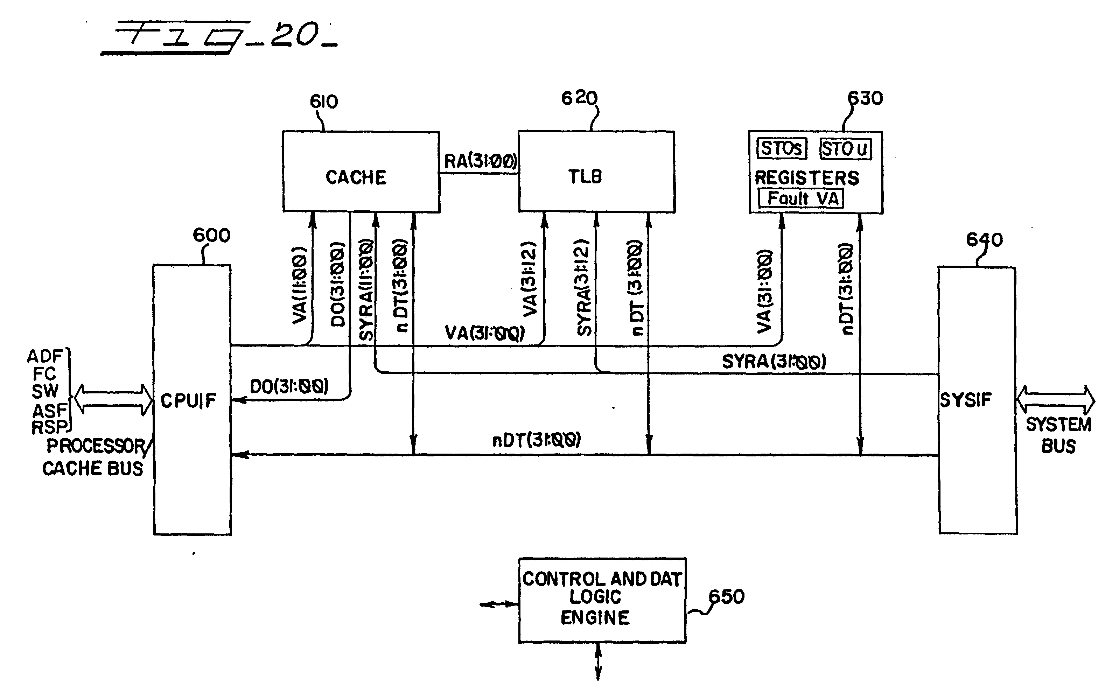

As discussed elsewhere herein in greater detail, the TLB is reserved for providing hardwired translation logic for critical functions. This provides a very high speed guaranteed main memory virtual to real mapping and translation capability. The hardwired translation logic block functions are illustrated in FIG. 13. Each line contains information as indicated in FIG. 11B. The translation and system information is provided for critical functions such as boot ROM, memory management, I/O, vectors, operating system and reserved locations, applications reserved locations as discussed above in greater detail with reference to FIGS. 11A-B.

In addition to the read-write TLB, there are eight hardwired virtual to real translations, as discussed with reference to FIG. 13. Some of these translations are mapped to real pages 0-3. Page 0 in virtual space, the first page in the low end of real memory, is used for trap and interrupt vectors. Pages 1-3 are used as a shared area for initialization of the system. Pages 6 and 7 are used for bootstrap system ROM and Pages 4 and 5 are used for memory mapped I/O. These eight page translations will only be used when in supervisor mode. As a result of these being hardwired in the TLB, a miss or page fault will never occur to the first eight virtual pages of system space.

The PL bits indicate the protection level of the page. The function code which accompanies the VA (virtual address) from the CPU contains the mode of memory reference. These modes are compared with the PL bits and if a violation is detected, a CPU Trap is generated.

The cache-MMU provides memory access protection by examining the four protection bits (PL) in the TLB entry or page table entry. This is accomplished by comparing the supervisor/user bit and K bit in the supervisor status word (SSW) with the access code, and, if there is a violation access is denied and a trap is generated to the CPU.

The virtual address which caused the trap is saved in a register and can be read with an I/O command.

There are three unique traps generated:

1. Instruction Fetch Access Violation - Instruction cache only.

2. Read Access Violation - Data cache only.

3. Write Access Violation - Data cache only.

| Access Code | PSW S,K Bits | | | |
|---|---|---|---|---|
| | 11 | 10 | 01 | 00 |
| 0000 | RW | - | - | - |
| 0001 | RW | RW | - | - |
| 0010 | RW | RW | RW | - |
| 0011 | RW | RW | RW | RW |
| 0100 | RW | RW | RW | R |
| 0101 | RW | RW | R | R |
| 0110 | RW | R | R | R |
| 0111 | RWE | RWE | RWE | RWE |
| 1000 | RE | - | - | - |
| 1001 | R | RE | - | - |
| 1010 | R | R | RE | - |
| 1011 | R | R | RE | RE |
| 1100 | - | RE | - | RE |
| 1101 | - | - | RE | - |
| 1110 | - | - | - | RE |
| 1111 | - | - | - | - |
| where:    RW = read/write,<br>E = instruction execution,<br>- = no access,<br>S = supervisor/user, and<br>K = protect. | | | | |

The (D) dirty bit in the data cache line indicates that the line has been modified since reading it from main memory.

The dirty bit in the TLB indicates that one or more words in that page have been modified.

When a word is to be written in the cache, the dirty bit in the line is set. If the dirty bit in the TLB is not set, it is then set and the line in the TLB is written back in the page table. If the dirty bit in the TLB is already set, then the page table is not updated. This mechanism will automatically update the page table dirty bit the first time the page is modified.

The referenced bit (R) in the TLB is used to indicate that the page has been referenced by a read or write at least once. The same approach that isused for the D bit will be used for updating the R bit in the page table entry.

The valid bits (SV, UV) are used to invalidate the line. On a cold start, both SV and UV are set to zero. On a context switch from one user to another, UV is set to zero. UV is not reset when going from User to Supervisor or back to the same user.

A 20 Bit Real Address (RA) is also stored at each line location. When the virtual address has a match, the real address is sent to the cache for comparison or to the SOR.

When the system is running in the non-mapped mode (i.e. no virtual addressing), the TLB is not active and the protection circuits are disabled.

The TLB responds to the following Memory Mapped I/O commands:

o    Reset TLB Supervisor Valid Bits - All SV bits in the TLB are reset.

o    Reset TLB User Valid Bits - All UV bits in the TLB are reset.

o   Reset D Bit - Set all dirty (D) bits to zero in the TLB.

o   Reset R Bit - Set all referenced (R) bits to zero in the TLB.

o   Read TLB Upper - Most significant part of addressed TLB location is read to CPU.

o   Read TLB Lower - Least significant part of addressed TLB location is read to CPU.

o   Write TLB Upper - Most significant part of addressed TLB location is written from CPU.

o   Write TLB Lower - Least significant part of addressed TLB location is written from CPU.

Memory mapped I/O to the cache-MMU goes through virtual page 4.

The system tags are used by the system to change the cache-MMU strategy for writing (i.e. copy back or write through), enabling the cache-MMU and handling I/O. The system tags are located in the page tables and the TLB.

| System Tags | | | | | |
|---|---|---|---|---|---|
| T4 | T3 | T2 | T1 | T0 | |
| 0 | 0 | 0 | T1 | T0 | Private, write through |
| 0 | 1 | 0 | T1 | T0 | Private, copy back |
| 0 | 1 | 1 | T1 | T0 | Non cacheable |
| 0 | 0 | 1 | T1 | T0 | Common, write through |
| 1 | X | 0 | T1 | T0 | Noncacheable, mem-mapped I/) area |
| 1 | X | 1 | T1 | T0 | Noncacheable, bootstrap area |
| R = referenced bit, D= dirty bit | | | | | |

Five of the system tags are brought outside the cache-MMU for decoding by the system. Tag T2 is used to differentiate between bootstrap and I/O space. Tag T4 is used to differentiate between memory space, and boot or I/O space. The UNIX operating system (e.g. UNIX) can use tags T0 and T1. Therefore, T0 and T1 cannot be used by the system designer unless the operating system is known to not use them. These four tags are only valid when the cache-MMU has acquired the system bus. These signals are bussed together with tags from other cache-MMU's.

ST(0 0 1 x x x x) : Common, Write Through

When virtual page 0 is detected in the TLB in supervisor mode, page 0 of real memory is assigned. This first page of real memory can be RAM or ROM and contains Vectors for traps and interrupts. This hardwired translation only occurs in Supervisor state. The most significant 20 bits of the real address are zero.

ST (1,X,1,X,X,X,X)

When page 6 and 7 in virtual memory are addressed, the system tags are output from the hardwired TLB. This translation occurs only in supervisor state. Pages 6 and 7 of virtual memory map into pages 0 and 1 of boot memory.

The most significant 19 bits of the real address are zero and bit 12 is a 1 for page 1 of boot memory, and a 0 for page 0.

The boot memory real space is not in the real memory space.

ST (1,X,0,X,X,X,X) Memory Mapped I/O

Pages 4 and 5 in the virtual space, when in supervisor mode, have a hardwired translation in the TLB. The most significant 19 bits of the translated real address are zero. The I/O system must decode system tags T2 and T4, which indicate memory mapped I/O. Further decoding of the most significant 20 bits of the real address can be used for additional pages of I/O commands. Each real page has 1024 commands, performed by read (word) and wtore (word) to the corresponding location.

When this hardwired page is detected in the TLB or page table entry, the read or write command is acted upon as if it were a noncacheable read or write.

The use and allocation of the I/O space is as follows:

I/O in Supervisor Mode, mapped or unmapped, pages 4 and 5

Pages 4 and 5 of the virtual address space are mapped respectively into pages 0 and 1 of the I/O address space by the hardwired TLB entries. Page 4 is used for commands to the cache chip.

I/O in Supervisor Mode, mapped, additional pages.

I/O space can also be defined in the page table. The I/O command is identified by the appropriate tag bits. Any virtual address, except pages 0-7 can be mapped to an I/O page, not including 0 and 1.

I/O Space in the Cache

An I/O address directed to the cache chip should be interpreted as follows:

```
Cache I/O Space


Page 4: cache I/O space
    Addresses 00004000 - 00004BFF - D-cache
    Addresses 00004C00 - 00004FFF - I-cache


Page 5: system I/O space
    Addresses 00005000 - 00005FFF


Cache I/O Commands
```

```
VA<31:12> = 0 0 0 0 4 Hex

VA<11:0> = RA<11:0>

Bit 11 = 0: specifies D-cache I/O space
    Bit 0: 0 = data part; 1=address part
    Bit 1: 0 = W; 1-X (compartment)
    Bits 2-3: word position
    Bits 4-10: line number

Bit 11=1, Bits 8,9 = 0: specifies TLB
    Bit 10: 0: D-cache; 1: I-cache
    Bit 0: 0 = lower, 1=upper
    Bit 1: 0 - W; 1 = X
    Bits 2-8: line number

Other:
Bit 10=1; I-cache, Bit 10=0: D-cache
    1 x 0 1 ---- 0 0 -- supervisor STO
    1 x 0 1 ---- 0 1 -- user STO
    1 x 0 1 ---- 1 0 -- F Reg. (virtual address
                                of fault)
    1 x 0 1 ---- 1 1 -- E Reg. (physical cache
                                location of
                                error)

1 x 1 1 0 0 0 0 0 1 - - reset cache LV all
1 x 1 1 0 0 0 0 1 0 - - reset TLB SV all
1 x 1 1 0 0 0 1 0 0 - - reset TLB UV all
1 x 1 1 0 0 1 0 0 0 - - reset TLB D all
1 x 1 1 0 1 0 0 0 0 - - reset TLB R all
```

Store Word

ST(0,1,0,X,X,D,R) - Private, Copy Back

A. LV is 1, and HIT: Write word in line and set line and page dirty bit.

B. Miss - Line to be replaced Not Dirty: Read quadword from memory and store in line. Write word in new line and set line and page dirty.

C. Miss - Line to be replaced Dirty: Write dirty line back to memory. Read new quadword into line. Write word in new line and set line and page dirty.

ST(0,0,0,X,X,D,R) - Private, Write Through

A. LV is 1, and HIT: Write data word in line and to memory. Set page dirty bit.

B. Miss: Write word in memory and set page dirty bit.

ST(0,0,1,X,X,D,R) - Common, Write Through

A. LV is 1 and HIT: Write data word in line and to memory. Set page dirty bit.

B. Miss: Write word in memory and set page dirty bit.

ST(0,1,1,X,X,D,R) - Noncacheable

A. Write word in main memory. If a hit, then purge.

Store Byte/Halfword

ST(0,1,0,X,X,D,R) - Private, Copy Back

A. LV is 1, and HIT: Write byte or halfword in line and set line and page dirty bit.

B. Miss - Line to be replaced is Not Dirty: Read quadword from memory and store in line. Write byte or halfword in new line and set line and page dirty.

C. Miss and Line to be replaced is Dirty: Write line back to memory. Read new quadword into line. Write byte or halfword in new line and set line and page dirty.

ST(0,0,X,X,D,R,) - Private, Write Through

A. HIT: Write byte or halfword in line. Copy modified word from cache line to memory.

B. MISS: Read word. Modify byte or halfword. Write modified word from cache line to memory. (Read/modify/write cycle.) (No write allocate.)

ST(0,0,1,X,X,D,R) - Common, Write Through

A. LV is 1, and HIT: Write byte or halfword in line. Write modified word from cache line to memory.

B. MISS: Read word. Write byte or halfword in line. Write modified word from cache line to memory. (Read/modify/write cycle; no write allocate.)

ST(0,1,1,X,X,D,R) - Non-Cacheable

A. Read word into cache chip. Update appropriate byte/halfword and write modified word back to main memory.

Test and Set

ST(0,1,1,X,X,D,R) - Non-Cacheable

Read main memory location, test and modify word and store back at same location. Return original word to CPU.
Memory bus is dedicated to cache until this operation is complete.
If the following system tag occurs while executing this instruction, an error condition will occur.

## 1 X X X X X (m/m I/O space or boot space)

Read Word/Byte/Halfword

ST(0,1,0,X,X,D,R) - Private, Copy Back

A. LV is 1, and HIT: Read word from cache to CPU.

B. Miss - Line to be replaced Not Dirty: Read new quadword from memory into cache. Read word to CPU.

C. Miss - Line to be replaced is Dirty: Write line back to memory. Read new quadword from memory into cache. Read word to CPU.

ST(0,0,X,X,D,R) or ST(0,0,1,X,X,D,R) - Write Through

A. LV is 1, and HIT: Read word from cache to CPU.

B. Miss: Read new quadword into line. Read word into CPU.

ST(0,1,1,X,X,D,R) Non-Cacheable

A. Read word from main memory to CPU.

Common Write From Cache To Memory

ST(0,0,1,X,X,D,R) - Common, Write Through

All caches examine the bus and if there is a hit, invalidate the line in cache. If there is not a hit, ignore the bus.
When an I/O system is reading data from the cache or main memory, the real address is examined by the cache and the following action takes place. The TLB is not accessed.

A. LV is 1 and HIT, and LD is 1: Read a word or a line from Cache to I/O

B. MISS: Read a word, quadword, or 16 words from memory to I/O.

When an I/O is taking place to main memory, the real address is examined by the cache and the following action taken. The TLB is not accessed and therefore the Dirty Bit is not changed in the page table or TLB.

A. LV is 1 and HIT: Write a word, quadword or 16 words from I/O to memory. Invalidate line or lines in cache.

B. MISS: Write a word, quadword, or 16 words from I/O to memory.

Virtual address to real address mapping system information is uniquely stored in each line for each of the W and X halves of the cache memory subsystem. This provides for extremely high-speed translation of virtual to real addresses to accelerate mapping of the virtual to real address space, so as to facilitate necessary in/out swapping procedures with secondary storage systems, such as through the I/O processor 150 of FIG. 1. The system information in each line of storage in the TLB memory subsystem 350 provides all necessary protection and rewrite information. The used bit for each subsystem line provides indication for rewriting into the least recently used half of the memory subsystem. Other replacement strategies could be implemented.

Where a high-speed communications structure is provided, such as in a monolithic integrated cache-MMU, this cache-MMU system architecture enhances very high-speed cache system operation and provides for great applications versatility.

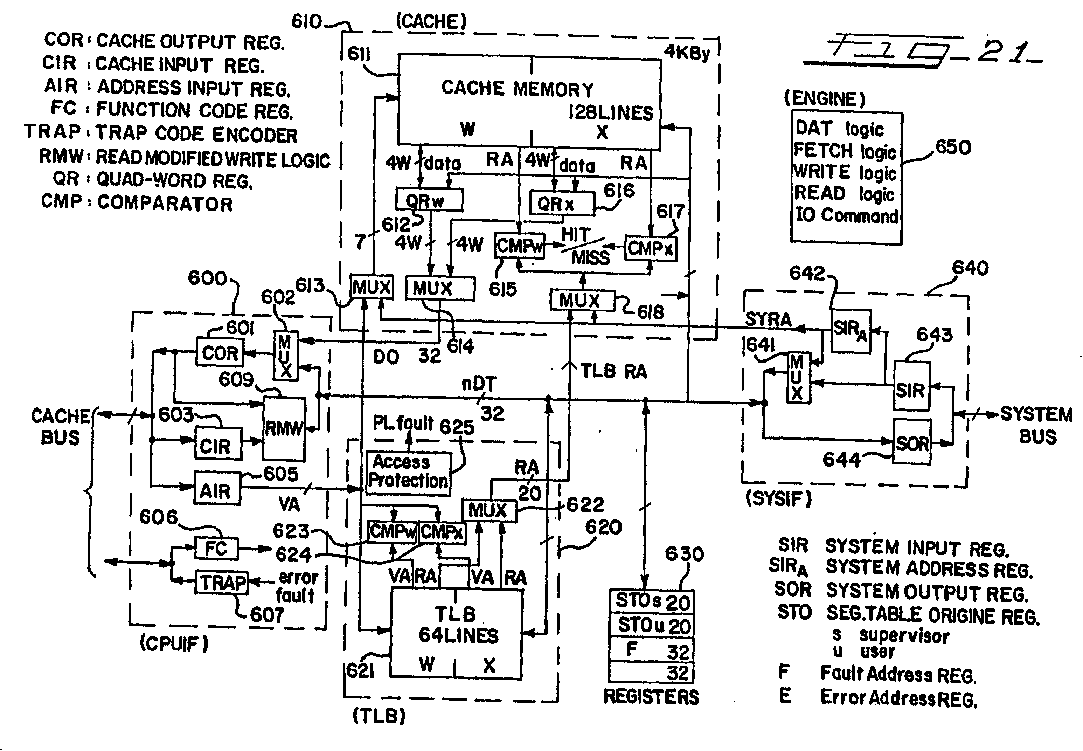

As illustrated in FIG. 14, the quad word boundary can be utilized to advantage in a line register architecture. The memory array of the cache memory 320 of FIG. 9 is coupled to a line register 400 which contains four words of word storage within a line boundary. The cache memory system 320 outputs four words at a time per cache hit to the line registers 400 which selectively store and forward the quad word output from the cache memory subsystem 320 to the cache output register, such as COR 230 of FIG. 8. This transfer clears when the "quad boundary equals zero" comparator output occurs. The output of the cache output register of the system interface of the cache-MMU system is thereafter coupled to the address data function code (i.e. ADF) bus of the processor/cache bus (i.e. buses 121 or 131, and bus 115 of FIG. 1).

The accumulator register (i.e. 310 of FIG. 9) is also coupled to the processor/cache interface bus to receive address information therefrom. If the cache memory management unit is configured as a data cache, the accumulator register stores the address from the processor/cache bus for use by the cache memory subsystem. If configured as an instruction cache, the accumulator register 310 is configured as a program counter, to both receive address information from the processor/cache interface bus, and to increment itself until a new authorized address is received from the processor/cache bus.

The output from the accumulator register 310 is coupled to a quad line boundary register 410, quad boundary comparator 420, and state control logic 430. The quad-word line boundary register 410 stores the starting address of the quad-word line boundary for the words stored in the line register 400.

The output of the quad-word line boundary register 410 is coupled to quad-word line boundary comparator 420. The comparator 420 compares the register 410 output to the virtual address output of the address register (i.e. accumulator-register 310) to determine whether the requested word is within the current quadword boundary for the line register 400. The state control logic 430 then determines the selection of either the line register 400 output or the access to the cache memory subsystem 320. The control logic 430 then selectively multiplexes to select the appropriate word from the line registers.

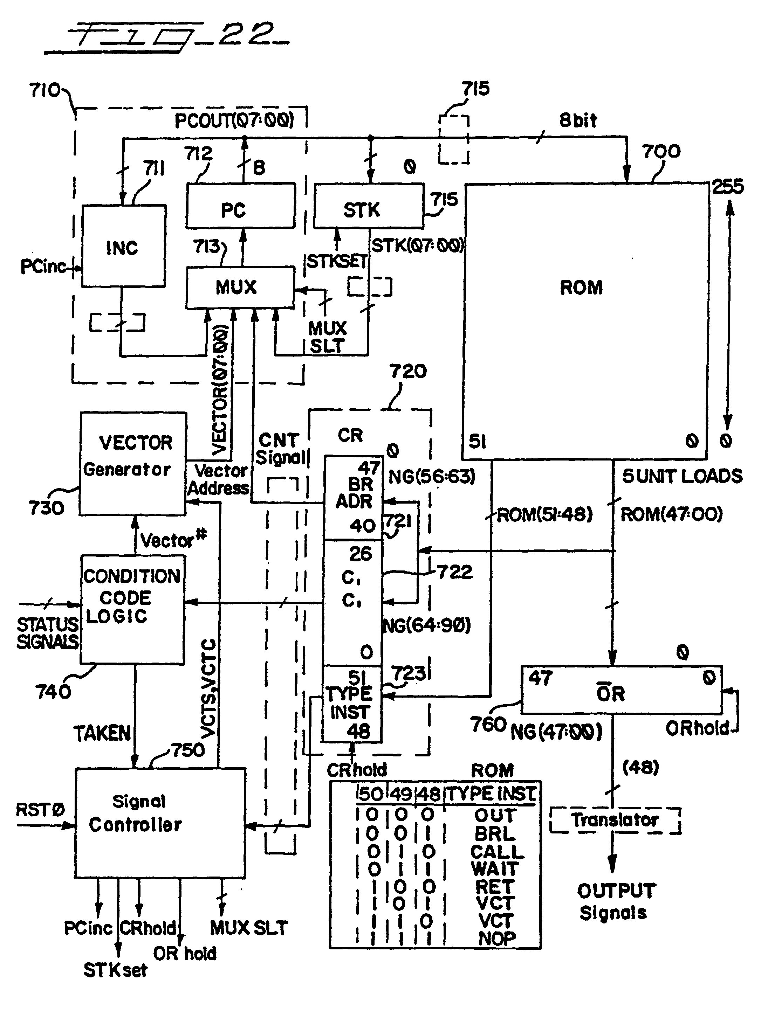

FIG. 15 illustrates the load timing for the cache-MMU systems 120 and 130 of FIG. 1. In the preferred embodiment, this is of data within quad word or 16-word boundaries. Alternatively, this can be for any size block of data. FIG. 15 illustrates the operation of the data cache 130 loading from the CPU 110, or alternatively of the instruction cache 120 loading on a branch operation. The master clock MCLK signal output of the system clock 160 of FIG. 1 is shown at the top of FIG. 15 with a time chart indicating 0, 30, 60, 90 and 120 nanosecond (i.e. ns) points from the start of the load cycle.

At the beginning of this cycle, a valid address is loaded from the CPU to the accumulator register of the respective cache-MMU system, and a function code is provided to indicate the type of transfer, as discussed in greater detail elsewhere herein. The Ons point occurs when the ASF signal is valid indicating an address strobe in process. If the data requested is on a quad line boundary for a new access, the data is available at the halfway point between the 90 and 120 nanosecond points of MCLK. However, where the access is for a request within a quad word boundary, the data access timing is much faster (e.g. at the 60ns point), as shown with the phantom lines on the ADF signal waveform, indicating data transfer within a quad line boundary.

Referring to FIG. 16, the store operation for the cache-MMU systems 120 and 130 of FIG. 1 is illustrated for storage from the CPU to the cache in a copyback mode, and additionally to main memory 140 for the write-through mode. The master clock, MCLK, is output from the system clock 160, as illustrated in FIG. 15 as a reference line. At time T1, the address strobe signal is activated indicating a valid address follows. At time T2, approximately one quarter MCLK clock cycle later, valid address and function code outputs are received on the appropriate lines of the processor/ cache interface bus, PDF and FC, respectively. At time T3, the address lines are tri-stated (floated) and data is written to the cache memory and/or to the main memory, as appropriate. Multiple data words can be transferred. Single, quad or 16-word mode is determined by the function code on the FC lines. At time T4, the response code is output indicating that the transfer is complete, ending the cycle.

Both Copy Back and Write Through main memory 140 update strategies are available in the cache-MMU and can be intermixed on a page basis. Control bits located in the page tables are loaded into the TLB to determine which strategy is used.

Copy back will generally yield higher performance. Data is written back to main memory only when it is removed from the cache-MMU. Those writes can be largely overlapped with fetches of blocks into the cache. Thus, copy back will in general cut bus traffic, and will minimize delays due to queueing on successive writes.

Write through has two advantages. First, main memory is always up to date, system reliability is improved, since a cache chip or processor failure will not cause the loss of main memory contents. Second, in a multiprocessor system, write through facilitates the maintenance of consistency between main memory shared among the processors.

The operating system can make these tags which determine write through vs. copy back available to the users so that they can make the appropriate choice.

FIGS. 17A-B illustrate the data flow of operations between the CPU 410, the cache-MMU 412, and the main memory 414. Referring to FIG. 17A, the data flow for a copy-back fast write operation is illustrated. The CPU 410 outputs data for storage in the cache-memory management unit 412. This dirties the contents of the cache memory for that location. On a purge, the cache-memory management unit 412 rewrites the dirty data to the respective private page in main memory 414. The processor 410 can simultaneously write new data into the cache-MMU 412 storage locations which are being purged. This provides the advantage of fast overall operations on write.

Referring to FIG. 17B, the write-through mode of operation is illustrated. This mode maintains data consistency, at some sacrifice in overall write speed. The CPU 410 writes simultaneously to the cache memory of the cache-memory management unit 412, and to the shared page in the main memory 414. This insures that the data stored at a particular location in a shared page is the most current value, as updated by other programs.

Referring to FIG. 18, the data flow and state flow interaction of the CPU 510, cache memory subsystem 512, and TLB/memory subsystem 514 are illustrated. Also illustrated is the interaction of the cache-MMU and CPU with the main memory 516, illustrating the DAT operation for copyback and write-through modes, and the temporal relationship of events.

The CPU 510 outputs a virtual address, at step one, to the TLB/memory subsystem 514 which outputs a real address to the cache memory subsystem 512, at step two. If a write-through operation is occurring or on a cache miss, the real address is also sent to the main memory 516. On a DAT operation, a portion of the virtual address plus the segment Table Origin address are sent to main memory at step two.

At step three, for the store mode, data is written out from the CPU 510 for storage in the cache memory subsystem 512 for both copyback and write-through modes, and additionally for storage in the main memory 516 for the write-through mode. For the load mode of operation, step three consists of data being loaded from the cache memory subsystem 512 to the CPU 510. On a cache miss, data is loaded from the main memory 516 to the cache memory subsystem 512 and to the CPU 510 during step three. On a cache miss in copyback mode, when dirty data is present in the cache memory (i.e. the dirty bit is set), the memory subsystem 512 outputs the dirty data back to the main memory 516.

Referring to FIG. 19, the data flow and operation of the DAT and TLB address translation process are illustrated. When a virtual address requires translation to a real address, and there are no translation values, corresponding to the requested translation, stored in the cache memory management unit system, the operation as illustrated in FIG. 19 occurs. The requested virtual address, as stored in the virtual address register-accumulator (i.e. 310 of FIG. 9), provides a virtual address "VA" (e.g. 32 bits) which requires translation. As discussed with reference to FIG. 7C, the virtual address is comprised of 10 bits of segment data virtual address VA<31:22>, 10 bits of page address, VA<21: 12> and 12 bits of displacement address, VA<11:0>.

The DAT logic performs the dynamic address translation when there is a miss in the TLB. The DAT logic waits for the write register to be empty and then performs two read accesses to main memory. The first read adds the segment number to a segment table origin (STO), and obtains the address of the page table. The second read adds the page number to the page table origin, and gets the real address of the page, as well as other useful information such as protection bits, copy back/write through status, dirty bits, etc. For each new user or process a new segment table origin can be used. The STO register in the DAT is loaded under CPU control. There are two STO registers, one for user mode, and the other for supervisor mode. The hardware automatically selects the proper register depending on the mode in the processor status word (PSW).

The access protection bits in the page tables are checked by the DAT logic for protect violations. If they occur, a CPU trap is generated. If a parity error occurs during a DAT operation while reading main memory, such that the data is not corrected and hence suspect, a CPU trap is generated.

A PF bit in the page table or segment table is the page fault indicator. The bit is set or reset by the software.

The system can be in a non mapped mode, with no virtual addressing. In this mode, the DAT facility is inactive and the protection bits are not used. However, this mode should be used only rarely, due to the vulnerability of the system to bugs and malicious damage.

After the DAT logic has completed a translation, the Virtual Address, Real Address and System Tags are sent to the TLB, where they are stored for future use until replaced.

The DAT will respond to the following Memory Mapped I/O Commands:

o   Load Supervisor STO Register (privileged)
o   Read Supervisor STO Register
o   Load User STO Register (privileged)
o   Read User STO Register
o   Read Virtual Address that caused page or protection fault.

This is discussed in greater detail with reference to FIG. 22.

As discussed hereinafter with reference to FIG. 21, the cache memory management unit system includes a register stack. This register stack contains a segment table origin (i.e. STO) register therein for each of the supervisor and user segment table origins for the then current supervisor and user, for the respective cache-memory management unit. The segment table origin register contains a 32-bit value, the most significant 20 bits of which represent the segment table origin value. As illiustrated in FIG. 19, this STO value is concatinated as the most significant portion of a word in an STO Entry Address Accumulator, with the 10-bit segment address from the virtual address register 310 concatinated as the next most significant portion of the word in the STO Entry Address Accumulator. The resultant 30 bit address forms a pointer to a segment table in the main memory.

The Segment Table Entry Address (i.e. STOEA) accumulator, within the cache memory management unit, accumulates and concatinates the address to be output to the main memory so as to address the segment table in main memory. A 32-bit address is constructed by utilizing the segment table origin 20 bits as address bits STOEA<31: 12>, utilizing the virtual address segment bits [VA31:22] as the next ten bits, STOEA<11:2>, of the segment table address, and concatinating zeros for bit positions STOEA<1:0> of the segment table address which is output to main memory from the STOEA accumulator. The segment table entry address output from the segment table entry address accumulator of the cache-MMU is output via the system bus to main memory. This provides access to the respective page table entry (i.e PTE) within the segment table in main memory corresponding to the segment table entry address output from the cache MMU system. The most significant 20 data bits, 31:12, of the addressed main memory location are output from the main memory back to the cache-MMU for storage in the Page Table Entry Address (i.e. PTEA) accumulator in the DAT of the cache MMU system. These 20 bits of the page table entry address are concatinated in the P.T.E.A. accumulator as the most significant 20 bits of a 32-bit words. The next most significant 10 bits are concatinated with the output from the virtual address register 310, bits VA<21:12>, representing the page selection bits. The least two significant bits of the page table entry address accumulator output are zeros. The page table entry address accumulator of the cache-MMU outputs a 32-bit address to the main memory via the system bus.

The page table entry address selects the entry point to a line in the page table in main memory. Each line in the page table is comprised ofmultiple fields, comprising the translated real address, system tags, protection, dirty, referenced, and page fault values for the corresponding virtual address. The selected line from the page table contains, as illustrated, 20 bits of real address "RA", five bits of system tag information ST, four bits of protection level information PL, one bit of dirty information D, one bit of referenced information R, and page fault information PF. These fields are discussed in greater detail with reference to FIGS. 11A-B.

The selected line from the page table is is transferred from the main memory back to the TLB in the cache-MMU for storage in the memory array of the TLB. Next, the 20 bits of real address from the TLB, for the just referenced line in the page table, are output and coupled to the most significant 20 bits of the Real Address accumulator in the cache-MMU. These 20 bits are concatinated in the Real Address accumulator as the most significant 20 bits, with the least significant 12 bits of the virtual address register 310, VA<11:0>, providing a 32-bit real address output from the Real Address Accumulator. This output from the Real Address accumulator is then output, via the system bus, to main memory to select the desired real address location. Responsive to this Real Address output, a block of words is transferred back to the cache memory subsystem for storage therein. The cache-MMU then transfers the initially requested word or words of information to the CPU. The procedure illustrated in FIG. 19 is only needed when the virtual address contained in the register accumulator 310 does not have corresponding translation values stored in the TLB of the cache-MMU. Thus, for any addressable locations presently stored in the cache MMU, translation data is already present. This would include all cases of write-back to main memory from the cache.

Referring to FIG. 20, a block diagram of the cache-MMU is illustrated. The processor to cache bus, 121 or 131 of FIG. 1, couples to the CPU interface 600. The cache memory subsystem 610, TLB subsystem 620, register stack 630, system interface 640, and microprogrammed control and DAT logic 650 are all coupled to the CPU interface 600. A virtual address bus (i.e. VA) is coupled from the CPU interface 600 to each of the cache subsystem 610, TLB subsystem 620, and register stack subsystem 630. A data output bus (i.e. DO) from the cache subsystem 610 to the CPU interface 600 couples the data output from the memory subsystem of the cache memory subsystem 610, illustrated as DO[31:00].

A bi-directional data bus, designated nDT[31:00] provides selective coupling of data, virtual address, real address, or function code, depending upon the operation being performed by the cache-MMU. The nDT bus couples to cache-MMU system elements 600, 610, 620, 630, 640, and 650. The system interface 640 couples to the system bus on one side and couples to the nDT bus and the SYRA bus on the internal cache-MMU side. The SYRA bus provides a real address from the system bus via the system interface 640 to the TLB 620 and cache subsystem 610. As illustrated, the least significant 12 bits, representing the displacement portion of the address, are coupled to the cache memory subsystem 610. The most significant 20 bits, SYRA[31:12] are coupled from the SYRA bus to the TLB subsystem 620. The control and DAT logic 650 coordinates system bus interface after a TLB 620 miss or cache subsystem 610 miss, and controls DAT operations.

Referring to FIG. 21, a more detailed block diagram of FIG. 20 is illustrated. The cache output register 601, cache input register 603, and address input register 605 of the CPU interface 600 are described in greater detail with reference to FIG. 8. FIG. 21 further illustrates the multiplexer 602, read-write logic 604 for performing read/modify/write operations, function code register 606 and trap encoder 607.

The read/modify/write logic 604 coordinates multiplexing of the cache memory subsystem output, via multiplexer 614 from the cache memory 611 of the cache memory subsystem 610, and via multiplexer 602 of CPU interface 600 for selective interconnection to the cache output register 601 and therefrom to the processor/cache bus. Alternatively, the multiplexer 602 can receive data from the system bus interface 640 via the nDT bus internal to the cache-MMU system, or from the read/modify/write logic 604. The RMW logic 604 has as inputs thereto the cache output register 601 output, and the cache input register 603 output. The function code register 606 and trap code encoder 607 are coupled to the processor. The function code register 606 is in responsive to function codes received from the processor for providing signals to other portions of the cache-MMU system. The trap logic 607 responds to error faults from within the cache-MMU system and provides outputs to the processor responsive to the trap logic for the given error fault.

The cache memory subsystem 610 is comprised of a cache memory array 611 having two 64-line cache stores, as described with reference to FIG. 9. The quad word output from each of the W and X halves of the cache memory array 611 are coupled to respective quad-word line registers 612 and 616. Quad word registers 612 and 616 are each independently coupled to the nDT bus, for coupling to the processor/cache bus via the CPU interface 600 or the system bus via via the system interface 640.

The real address outputs from the W and X halves of the cache memory array 611 are coupled to one input each of comparators 615 and 617, respectively, each of which provide a hit/miss signal output. The other inputs of each of the comparators 615 and 617 are coupled to the output of multiplexer 618. The multiplexer 618 outputs a real address. The real address inputs are coupled to the multiplexer 618 from the system bus interface 640 via the SYRA bus therefrom, and from multiplexer 622 of the TLB subsystem 620 which provides a translated real address from its TLB memory array 621 responsive to a physical address received from the processor/cache bus via the CPU interface 600.

The quad word registers 612 and 616 each have independent outputs coupling to multiplexer 614. Multiplexer 614 selectively outputs the word of selected information to multiplexer 602 for selective coupling to the cache output register 601.

As discussed with reference to FIG. 9, multiplexer 613 selectively couples a lower portion of a real address, either from the CPU interface 600 or from the TLB 620, to the multiplexer 613 for selective output and coupling to the cache memory array 611, to select a line therein.

The TLB memory array 621 selectively provides output from a selected line therein responsive to either an address from the nDT bus or an address supplied from the CPU interface 600 as output via the address input register 605. A portion (i.e. lower portion bits 12 to 0) of the virtual address output of address input register 605 is coupled to the TLB memory subsystem 621, and a more significant portion (i.e. bits 31 to 22) is coupled to one input each of comparators 623 and 624 of the TLB 620. The translated virtual address output from the TLB memory array subsystem 621, for each of the W and X halves, as discussed with regard to FIG. 9, are coupled to the other inputs of comparators 623 and 624. Comparators 623 and 624 each provide independent hit/miss signal outputs. The multiplexer 622 has Real Address inputs coupling thereto as output from the W and X halves of the TLB memory subsystem 621. The multiplexer 622 selectively provides output of the translated real address to the input of multiplexer 618 of the cache memory subsystem 610, responsive to the hit/miss outputs of comparators 623 and 624.

The address protection logic 625 provides selective protection of read and write access for certain TLB lines, responsive to information as initially loaded from the page table entry as discussed with reference to FIG. 19.

The register stack 630 provides for storage of segment table origin values in two segment table original registers. The register stock 630 includes segment table origin supervisor and user registers, a fault address register F, and other registers, such as an error address register.

The control and DAT logic 650 provides direct address translation logic, fetch logic, write logic, read logic, and I/O command operational logic.

Referring to FIG. 22, a detailed block diagram of the control logic microengine 650 of FIG. 21 is illustrated. The microengine is comprised of a read-only memory 700 and a microengine operational subsystem comprising program counter 710, stack pointer 715, instruction register 720, vector generator 730, condition code signal selector 740, signal controller and instruction decoder 750, and output register 760.

The program counter 710 is comprised of a program counter-accumulator register 712, a multiplexer 713, and increment logic 711. The multiplexer 713 provides a signal output to the program counter-accumulator register 712 responsive to a multiplex select signal MUXSLT, as output from the signal controller/instruction decoder 750. This selects one of: the eight bit vector address outputs from the vector generator 730; the output of the next sequential program counter address from the increment logic 711, responsive to a PC increment signal PCINC as output from the signal controller/instruction decoder system 750; or a branch address as output from the branch address register of the instruction register 720. The output of the multiplexer 713 is coupled to the program counter accumulator register 712 for selective output therefrom as a PC output address PCOUT. PCOUT is coupled to the increment logic 711, to the stack pointer 715, and to the address selection inputs of the read-only memory subsystem 700.

As illustrated in FIG. 22, the memory 700 includes 256 lines of 52 bits each, each line having an instruction and/or data value to be output to the instruction register 720 and/or the output register 760. The most significant bit positions (i.e. output bits 51 to 48) are coupled from the read-only memory subsystem 700 to the Type of Instruction register 723 of the Instruction Register 720. These bits indicate whether the remaining bits of the line comprise an instruction or control signal output. The remaining bits of the line (i.e. bits 47 to 0) are coupled to the output register 760, and to the instruction register 720. These bits are coupled to the branch address register 721 (i.e. bits 40 to 47 of the read-only memory 700 output) and to the condition code register 722 (i.e. bits 26 to 0).

The output from the instruction register 723 is coupled from the instruction register 723 to the signal controller 750. The instruction register 723 outputs instruction type information, responsive to a CRhold signal as output from the signal controller 750. For example, utilizing bits 48 to 51 of the read-only memory 700 output, a 000 could indicate an output instruction, 001 a branch instruction, 010 a call instruction, 011 a wait instruction, 100 a return instruction, 101 and 110 vector operations, and 111 a no-op operation.

The output of the condition code register 722 is coupled to the condition signal selection logic 740. The condition code decoder 740 also has condition code and status inputs coupled to it. These signals indicate a cache or TLB miss, a function code to tell the status of the operation such as read or write, status and condition code information, etc. The condition code decoder 740 provides a "token" output to the signal controller 750 to indicate status, and further outputs a vector number to the vector generator 730. The combination of the miss and/or function code information defines the destination address for the vector process.

The signal controller 750 provides vector signal timing outputs (i.e. VCTs, VCTc) coupled to the vector generator 730. Where a vector operation is indicated, the vector address is loaded from the vector generator 730 into the program counter accumulator 712 via multiplexer 713, and the PC counter 710 is incremented tp sequence instructions until the vector routine is completed.

The branch address register 721 selectively outputs branch address signals to the program counter 710 for utilization thereby in accordance with control signals as output from the signal controller and instruction decoder 750. Output of signals from the output register 760 are responsive to the selective output of an output register hold "OR hold" signal from signal controller 750 to the output register 760. The signals as output from the output register 760 are coupled to other areas of the cache-MMU system (i.e. control signals and/or data) for utilization by the other areas of the cache MMU system.

**Claims**

1.  A computer system comprising:

    a primary memory (140) for storing pages of data;
    a system bus (141) coupled to the primary memory (140);
    a first data processing element coupled to the system bus (141) for processing data from the primary memory (140);
    a second data processing element for processing data from the primary memory (140);

cache memory management means (120, 130) coupled to the second data processing element and to the system bus (141), including:

a cache memory (320) for storing data from the primary memory (140) wherein data from the primary memory (140) processed by either one or both the first and second data processing elements may be stored in the cache memory (320);

system tag means for storing a system tag (ST) which indicates one of a plurality of cache data storage modes (W. Thru, Copyback); and

cache controller means for translating virtual addresses (VA) received from the second data processing element into real addresses (RA), for selectively storing and retrieving data to and from the cache memory (320), and for communicating data between the cache memory (320) and the second data processing element, the cache controller means including:

means for selectively accessing primary memory (140) via the system bus (141) to obtain page table entries (PTE) containing virtual to physical address translation information and a system tag (ST) for pages of data in primary memory (140);

cache mode effecting means for effecting the cache data storage mode (W. Thru, Copyback), indicated by the system tag (ST);

data consistency means for ensuring shared data consistency between the first and second data processing elements, the data consistency means including system bus monitoring means, coupled to the system bus (141), for monitoring activity on cycles of the system bus (141), to determine whether cycles are of the type that may affect data consistency; and

means for determining whether the cache memory (320) should be purged or should be supplied to the system bus (141).

2. The computer system according to claim 1 wherein the plurality of data storage modes (W. Thru, Copyback) includes:

a write-through mode (W. Thru) wherein, when the second data processing element modifies data having a virtual address (VA) corresponding to a page of data associated with this mode, the cache memory management means (120, 130) stores the modified data in the primary memory (140) and the cache memory (320); and

a copyback mode (Copyback) wherein, when the second data processing element modifies data having a virtual address (VA) corresponding to a page of data associated with this mode, the cache memory management means (120, 130) stores the modified data only in the cache memory (320).

3. The computer system according to claim 2 wherein the cache memory management means further comprises primary memory control means for selectively storing data to and retrieving data from the primary memory (140) in response to the system tags (ST) and the real addresses (RA).

4. The computer system according to claim 3 wherein, prior to overwriting existing modified data in the cache memory (320) for pages having a copyback mode (Copyback) associated therewith, the cache management means stores the modified data in the primary memory (140) at the real addresses (RA) associated with the modified data.

5. The computer system according to claim 3 wherein the cache controller means includes a primary memory access detecting means for detecting when the primary memory means is being accessed by the first data processing element.

6. The computer system according to claim 5 wherein the system bus means includes cycle type means for indicating a type of access to the primary memory means by the first data processing element.

7. The computer system according to claim 6 wherein said system tag (ST) additionally indicates one of a plurality of address space attributes.

8. The computer system according to claim 7 wherein said plurality of address space attributes include:

a shared address space attribute; and
a private address space attribute.

9. The computer system according to claim 8 further comprising:

a boot loader memory coupled to said system bus (141) for storing pages of data therein;
an input-output device for storing pages of data therein;

wherein said plurality of address space attributes include:

a boot memory address space attribute for indicating that a virtual address corresponds to a page of data stored in said boot memory;
an I/O address space attribute for indicating that a virtual address corresponds to a page of data stored in said input-output device; and
a primary memory address space attribute for indicating that a virtual address corresponds to a page of data stored in said primary memory.

10. A method of maintaining cache coherency in a computer system having a cache memory (320), a cache controller, a plurality of cache data storage modes (W. Thru, Copyback), a system bus (141), a primary memory (140), a first data processing element coupled to the system bus (141) for processing data from the primary memory (140), and a second data processing element for processing data from the primary memory (140) comprising the steps of:

selectively accessing primary memory (140) via the system bus (141) to obtain a page table entry (PTE) wherein the page table entry (PTE) contains virtual address (VA) to real address (RA) translation data and a system tag (ST) for pages of data in primary memory (140);
storing in a translation buffer the virtual address (VA) to real address (RA) translation data and the system tag (ST);

wherein the system tag (ST) is one of a selected one of a plurality of cache data storage modes (W. Thru, Copyback) which include:

a write-through mode (W. Thru) wherein, when the second data processing element modifies data having a virtual address (VA) corresponding to a page of data associated with this strategy, the modified data is stored in the primary memory (140) and the cache memory (320); and
a copy-back mode (Copyback) wherein, when the second data processing element modifies data having a virtual address (VA) corresponding to a page of data associated with this strategy, the modified data is stored in the cache memory (320) and not in the primary memory (140);
translating virtual addresses (VA) received from the second data processing element into real addresses (RA);
effecting the memory update strategy indicated by the system tag (ST) corresponding to the page of data associated with the cache data storage mode (W. Thru, Copback); and
effecting shared data consistency between the first and second data processing elements by monitoring activity on cycles of system bus (141), to determine whether cycles are of the type that may affect data consistency; and
determining whether the cache memory (320) should be purged or should be supplied to the system bus (141).

11. The method according to claim 10 wherein the shared data consistency step further comprises the step of detecting when the primary memory (140) is being accessed by the first data processing element.

12. The method according to claim 10 wherein the shared data consistency step further comprises the step of, in response to the cycle type, determining whether a storage location being accessed in the primary memory (140) corresponds to data stored in the cache memory (320).

13. The method according to claim 12 wherein the shared data consistency step further comprises the step of, in response to the cycle type, selectively updating or invalidating the data stored in the cache memory (320) which corresponds to the accessed primary memory (140) storage location when the cycle type is a write cycle.

14. The method according to claim 13 wherein the shared data consistency step further comprises the step of invalidating the data stored in the cache memory (320) which corresponds to the accessed primary memory (140) storage location when writing the entire cache line.

15. The method according to claim 14 wherein the shared data consistency step further comprises the step of updating the data stored in the cache memory (320) which corresponds to the accessed primary memory (140) storage location when writing less than the entire cache line.

16. The method according to claim 15 wherein the shared data consistency step further comprises the step of, in response to the cycle type, coupling the data stored in the cache memory (320) which corresponds to the accessed primary memory (140) storage location to the system bus (141) when the cycle type is a read cycle.

17. The method according to claim 16 wherein the shared data consistency step further comprises the step of coupling the data stored in the cache memory (320) which corresponds to the accessed primary memory (140) storage location to the system bus (141) only when the cache data has been modified by the second data processing element since the cache data was stored in the cache memory (320).

18. The method according to claim 17 wherein the shared data consistency step further comprises the step of refraining from coupling the data to the system bus (141) from the-primary memory (140) when the cache controller couples data that corresponds to the accessed primary memory storage location to the system bus (141).

19. The method according to claim 10 wherein the plurality of cache data storage modes includes a non-cached storage mode wherein data having a virtual address (VA) corresponding to a page of data associated with this storage mode is not stored in the cache memory (320).

20. The method according to claim 19 wherein the shared data consistency step further comprises the steps of:

  determining if data within the cache memory (320) corresponds to the accessed primary memory (140) storage location for accesses to cacheable memory space; and
  refraining from the determination for accesses to non-cacheable memory space.

**Patentansprüche**

1. Computersystem, das umfaßt:

  einen Hauptspeicher (140) zum Speichern von Datenseiten;
  einen Systembus (141), der mit dem Hauptspeicher (140) gekoppelt ist;
  ein erstes Datenverarbeitungselement, das mit dem Systembus (141) gekoppelt ist, um Daten vom Hauptspeicher (140) zu verarbeiten;
  ein zweites Datenverarbeitungselement zum Verarbeiten von Daten vom Hauptspeicher (140); und
  Cachespeicher-Managementmittel (120, 130), die mit dem zweiten Datenverarbeitungselement und mit dem Systembus (141) gekoppelt und versehen sind mit:

    einem Cachespeicher (320) zum Speichern von Daten von dem Hauptspeicher (140), wobei Daten von dem Hauptspeicher (140), die von dem ersten und/oder dem zweiten Datenverarbeitungselement verarbeitet worden sind, in dem Cachespeicher (320) gespeichert werden können;
    Systemtag-Mitteln, die ein Systemtag (ST) speichern, das eine von mehreren Cachedaten-Speicherbetriebsarten (W. Thru, Copyback) angibt; und
    Cachecontroller-Mitteln, die virtuelle Adressen (VA), die von dem zweiten Datenverarbeitungselement empfangen werden, in reale Adresse (RA) übersetzen, um Daten wahlweise in dem Cachespeicher (320) zu speichern und von ihm wiederzugewinnen und um Daten zwischen dem Cachespeicher (320) und dem zweiten Datenverarbeitungselement auszutauschen, wobei die Cachecontroller-Mittel umfassen:

      Mittel, die über den Systembus (141) wahlweise auf den Hauptspeicher (140) zugreifen, um Seitentabelleneinträge (PTE) zu erhalten, die Informationen bezüglich der Übersetzung von virtuellen in physikalische Adressen und ein Systemtag (ST) für Datenseiten in dem Hauptspeicher (140) enthalten;
      Cachebetriebsart-Ausführungsmittel, die die Cachedaten-Speicherbetriebsart (W. Thru, Copyback), die durch das Systemtag (ST) angegeben wird, ausführen;
      Datenkonsistenzmittel, die die Konsistenz von gemeinsam genutzten Daten zwischen dem ersten und dem zweiten Datenverarbeitungselement sicherstellen und Systembus-Überwachungsmittel enthalten, die mit dem Systembus (141) gekoppelt sind, um die Aktivität in Zyklen des Systembusses (141) zu überwachen, um festzustellen, ob Zyklen von einem Typ sind, der die Datenkonsistenz beeinflussen könnte; und
Mittel, die feststellen, ob der Cachespeicher (320) gelöscht oder ob sein Inhalt zum Systembus (141) geschickt werden sollte.

2. Computersystem nach Anspruch 1, bei dem die mehreren Daten-Speicherbetriebsarten (W. Thru, Copyback) umfassen:

eine Durchschreibbetriebsart (W. Thru), bei der die Cachespeicher-Managementmittel (120, 130) dann, wenn das zweite Datenverarbeitungselement Daten, die eine virtuelle Adresse (VA) besitzen, die einer Datenseite entspricht, die dieser Betriebsart zugeordnet sind, modifiziert, die modifizierten Daten in dem Hauptspeicher (140) und in dem Cachespeicher (320) speichern; und
eine Rückkopier-Betriebsart (Copyback), bei der die Cachespeicher-Managementmittel (120, 130) dann, wenn das zweite Datenverarbeitungselement Daten, die eine virtuelle Adresse (VA) besitzen, die einer Datenseite entspricht, die dieser Betriebsart zugeordnet sind, modifiziert, die modifizierten Daten nur in dem Cachespeicher (320) speichern.

3. Computersystem nach Anspruch 2, bei dem die Cachespeicher-Managementmittel femer Hauptspeicher-Steuermittel umfassen, die in Reaktion auf die Systemtags (ST) und die realen Adressen (RA) wahlweise Daten im Hauptspeicher (140) speichern und aus ihm wiedergewinnen.

4. Computersystem nach Anspruch 3, bei dem vor dem Überschreiben vorhandener modifizierter Daten im Cachespeicher (320) für Seiten, denen eine Rückkopier-Betriebsart (Copyback) zugeordnet ist, die Cache-Managementmittel die modifizierten Daten in dem Hauptspeicher (140) bei den realen Adressen (RA), die den modifizierten Daten zugeordnet sind, speichern.

5. Computersystem nach Anspruch 3, bei dem die Cachecontroller-Mittel ein Hauptspeicherzugriff-Erfassungsmittel umfassen, das erfaßt, wenn das erste Datenverarbeitungselement auf die Hauptspeichermittel zugreift.

6. Computersystem nach Anspruch 5, bei dem die Systembusmittel Zyklustypmittel umfassen, die den Typ des Zugriffs auf die Hauptspeichermittel durch das erste Datenverarbeitungselement angeben.

7. Computersystem nach Anspruch 6, bei dem das Systemtag (ST) zusätzlich eines von mehreren Adreßraumattributen angibt.

8. Computersystem nach Anspruch 7, bei dem die mehreren Adreßraumattribute umfassen:

ein Attribut bezüglich eines gemeinsam genutzten Adreßraums; und
ein Attribut bezüglich eines privaten Adreßraums.

9. Computersystem nach Anspruch 8, das femer umfaßt:

einen Bootlader-Speicher, der mit dem Systembus (141) gekoppelt ist und in dem Datenseiten gespeichert werden;
eine Eingabe/Ausgabe-Vorrichtung, in der Datenseiten gespeichert werden;

wobei die mehreren Adreßraumattribute umfassen:

ein Attribut bezüglich eines Bootspeicher-Adreßraums, das angibt, daß eine virtuelle Adresse einer in den Bootspeicher gespeicherten Datenseite entspricht;
ein Attribut bezüglich eines E/A-Adreßraums, das angibt, daß eine virtuelle Adresse einer in der Eingabe/Ausgabe-Vorrichtung gespeicherten Datenseite entspricht; und
ein Attribut bezüglich eines Hauptspeicher-Adreßraums, das angibt, daß eine virtuelle Adresse einer in dem Hauptspeicher gespeicherten Datenseite entspricht.

10. Verfahren zum Aufrechterhalten der Cache-Kohärenz in einem Computersystem, das einen Cachespeicher (320), einen Cache-Controller, mehrere Cachedaten-Speicherbetriebsarten (W. Thru, Copyback), einen Systembus (141), einen Hauptspeicher (140), ein erstes Datenverarbeitungselement, das mit dem Systembus (141) gekoppelt ist, um Daten von dem Hauptspeicher (140) zu verarbeiten, und ein zweites Datenverarbeitungselement, das Daten von dem Hauptspeicher (140) verarbeitet, enthält, mit den folgenden Schritten:

wahlweises Zugreifen auf den Hauptspeicher (140) über den Systembus (141), um einen Seitentabelleneintrag (PTE) zu erhalten, der Daten bezüglich einer Übersetzung von virtuellen Adressen (VA) in reale Adressen (RA) sowie ein Systemtag (ST) für Datenseiten im Hauptspeicher (140) enthält;
Speichern von Daten bezüglich der Übersetzung der virtuellen Adressen (VA) in reale Adressen (RA) und Speichern des Systemtags (ST) in einem Übersetzungspuffer;

wobei das Systemtag (ST) eine von mehreren Cachedaten-Speicherbetriebsarten (VV. Thru, Copyback) ist, die umfassen:

eine Durchschreib-Betriebsart (W. Thru), bei der dann, wenn das zweite Datenverarbeitungselement Daten, die eine virtuelle Adresse (VA) besitzen, die einer Datenseite entspricht, die dieser Strategie zugeordnet sind, modifiziert, die modifizierten Daten in dem Hauptspeicher (140) und in dem Cachespeicher (320) gespeichert werden; und
eine Rückkopier-Betriebsart (Copyback), bei der dann, wenn das zweite Datenverarbeitungselement Daten, die eine virtuelle Adresse (VA) besitzen, die einer Datenseite entspricht, die dieser Strategie zugeordnet sind, modifiziert, die modifizierten Daten in dem Cachespeicher (320) und nicht in dem Hauptspeicher (140) gespeichert werden;
Übersetzen virtueller Adressen (VA), die von dem zweiten Datenverarbeitungselement empfangen werden, in reale Adressen (RA);
Ausführen der Speicheraktualisierungsstrategie, die durch das Systemtag (ST) angegeben wird, das der Datenseite entspricht, die der Cachedaten-Speicherbetriebsart (W. Thru, Copyback) zugeordnet ist; und
Ausführen einer Konsistenz gemeinsam genutzter Daten zwischen dem ersten und dem zweiten Datenverarbeitungselement durch Überwachen der Aktivität in Zyklen des Systembusses (141), um festzustellen, ob Zyklen von dem Typ sind, der die Datenkonsistenz beeinflussen könnte; und
Feststellen, ob der Cachespeicher (320) gelöscht oder zum Systembus (141) geschickt werden sollte.

11. Verfahren nach Anspruch 10, bei dem der Schritt des Ausführens der Konsistenz gemeinsam genutzter Daten ferner den Schritt umfaßt, bei dem erfaßt wird, ob das erste Datenverarbeitungselement auf den Hauptspeicher (140) zugreift.

12. Verfahren nach Anspruch 10, bei dem der Schritt des Ausführens der Konsistenz gemeinsam genutzter Daten femer den Schritt umfaßt, bei dem in Reaktion auf den Zyklustyp festgestellt wird, ob ein Speicherplatz im Hauptspeicher (140), auf den zugegriffen wird, Daten entspricht, die im Cachespeicher (320) gespeichert sind.

13. Verfahren nach Anspruch 12, bei dem der Schritt des Ausführens der Konsistenz gemeinsam genutzter Daten femer den Schritt umfaßt, bei dem in Reaktion auf den Zyklustyp Daten, die im Cachespeicher (320) gespeichert sind und dem Speicherplatz entsprechen, auf den im Hauptspeicher (140) zugegriffen wird, wahlweise aktualisiert oder ungültig gemacht werden, wenn der Zyklustyp ein Schreibzyklus ist.

14. Verfahren nach Anspruch 13, bei dem der Schritt des Ausführens der Konsistenz gemeinsam genutzter Daten den Schritt umfaßt, bei dem die im Cachespeicher (320) gespeicherten Daten, die dem Speicherplatz im Hauptspeicher (140) entsprechen, auf den zugegriffen wird, ungültig gemacht werden, wenn die gesamte Cachezeile beschrieben wird.

15. Verfahren nach Anspruch 14, bei dem der Schritt des Ausführens der Konsistenz gemeinsam genutzter Daten den Schritt umfaßt, bei dem die im Cachespeicher (320) gespeicherten Daten, die dem Speicherplatz im Hauptspeicher (140) entsprechen, auf den zugegriffen wird, aktualisiert werden, wenn in weniger als die gesamte Cachezeile geschrieben wird.

16. Verfahren nach Anspruch 15, bei dem der Schritt des Ausführens der Konsistenz gemeinsam genutzter Daten den Schritt umfaßt, bei dem in Reaktion auf den Zyklustyp die im Cachespeicher (320) gespeicherten Daten, die dem Speicherplatz im Hauptspeicher (140), auf den zugegriffen wird, entsprechen, mit dem Systembus (141) gekoppelt werden, wenn der Zyklustyp ein Lesezyklus ist.

17. Verfahren nach Anspruch 16, bei dem der Schritt des Ausführens der Konsistenz gemeinsam genutzter Daten femer den Schritt umfaßt, bei dem die im Cachespeicher (320) gespeicherten Daten, die dem Speicherplatz im

**EP 0 732 656 B1**

Hauptspeicher (140), auf den zugegriffen wird, entsprechen, mit dem Systembus (141) nur dann gekoppelt werden, wenn die Cachedaten durch das zweite Datenverarbeitungselement modifiziert worden sind, seit die Cachedaten in dem Cachespeicher (320) gespeichert wurden.

**18.** Verfahren nach Anspruch 17, bei dem der Schritt des Ausführens der Konsistenz gemeinsam genutzter Daten femer den Schritt umfaßt, bei dem der Hauptspeicher (140) das Koppeln der Daten in den Systembus (141) unterläßt, wenn der Cachecontroller Daten, die dem Speicherplatz im Hauptspeicher, auf den zugegriffen wird, entsprechen, in den Systembus (141) koppelt.

**19.** Verfahren nach Anspruch 10, bei dem die mehreren Cachedaten-Speicherbetriebsarten eine Speicherbetriebsart ohne Cachespeicherung umfassen, in der Daten, die eine virtuelle Adresse (VA) besitzen, die einer Datenseite entspricht, die dieser Speicherbetriebsart zugeordnet ist, nicht im Cachespeicher (320) gespeichert werden.

**20.** Verfahren nach Anspruch 19, bei dem der Schritt des Ausführens der Konsistenz gemeinsam genutzter Daten femer die folgenden Schritte umfaßt:

Feststellen, ob Daten im Cachespeicher (320) dem Speicherplatz im Hauptspeicher (140), auf den zugegriffen wird, entsprechen, um auf cachefähigen Speicherraum zuzugreifen; und
Unterlassen dieser Feststellung für Zugriffe auf nicht cachefähigen Speicherraum.


**Revendications**

**1.** Système informatique comprenant :

une mémoire principale (140) destinée à mémoriser des pages de données ;
un bus de système (141) couplé à la mémoire principale (140) ;
un premier élément de traitement de données couplé au bus de système (141) afin de traiter des données à partir de la mémoire principale (140) ;
un second élément de traitement de données destiné à traiter des données à partir de la mémoire principale (140) ;
un moyen de gestion d'antémémoire (120, 130) couplé au second élément de traitement de données et au bus de système (141), comportant :

une antémémoire (320) destinée à mémoriser des données à partir de la mémoire principale (140), dans lequel des données provenant de la mémoire principale (140), traitées par l'un ou l'autre des premier et second éléments de traitement de données, ou les deux, peuvent être mémorisées dans l'antémémoire (320) ;
un moyen de mémorisation d'étiquette de système destiné à mémoriser une étiquette de système (EtS) qui indique l'un d'une pluralité de modes de mémorisation de données d'antémémoire (Ecr.Etend., Recopie) ; et
un moyen formant régisseur d'antémémoire destiné à convertir des adresses virtuelles (AdV) reçues à partir du second élément de traitement de données en adresses réelles (AdR), afin, de manière sélective, de mémoriser des données dans l'antémémoire (320) et d'en extraire de cette dernière, et d'assurer la communication des données entre l'antémémoire (320) et le second élément de traitement de données, le moyen formant régisseur d'antémémoire comportant :

un moyen destiné à accéder de manière sélective à la mémoire principale (140) par l'intermédiaire du bus de système (141) afin d'obtenir des entrées de table de page (ETP) contenant des informations de conversion d'adresse virtuelle en adresse physique et une étiquette de système (EtS) pour des pages de données dans la mémoire principale (140) ;
un moyen de mise en oeuvre de mode d'antémémoire destiné à mettre en oeuvre le mode de mémorisation de données d'antémémoire (Ecr.Etend., Recopie), indiqué par l'étiquette de système (EtS) ;
un moyen de maintien de cohérence de données destiné à assurer la cohérence de données partagées entre les premier et second éléments de traitement de données, le moyen de maintien de cohérence de données comportant un moyen de surveillance de bus de système, couplé au bus de système (141), destiné à surveiller l'activité sur des cycles du bus de système (141), de manière à déterminer si des cycles sont du type qui peuvent affecter la cohérence de données ; et

un moyen destiné à déterminer si l'antémémoire (320) doit être effacée ou doit être délivrée au bus de système (141).

2. Système informatique selon la revendication 1, dans lequel la pluralité de modes de mémorisation de données (Ecr.Etend., Recopie) comporte :

un mode d'écriture étendue (Ecr.Etend.) dans lequel, lorsque le second élément de traitement de données modifie des données présentant une adresse virtuelle (AdV) correspondant à une page de données associée à ce mode, le moyen de gestion d'antémémoire (120, 130) mémorise les données modifiées dans la mémoire principale (140) et l'antémémoire (320) ; et

un mode de recopie (Recopie) dans lequel, lorsque le second élément de traitement de données modifie des données présentant une adresse virtuelle (AdV) correspondant à une page de données associée à ce mode, le moyen de gestion d'antémémoire (120, 130) mémorise les données modifiées uniquement dans l'antémémoire (320).

3. Système informatique selon la revendication 2, dans lequel le moyen de gestion d'antémémoire comporte, en outre, un moyen de commande de mémoire principale destiné, de manière sélective, à mémoriser des données dans la mémoire principale (140) et à en extraire à partir de cette dernière en réponse aux étiquettes de système (EtS) et aux adresses réelles (AdR),

4. Système informatique selon la revendication 3, dans lequel, avant la réécriture de données modifiées existantes dans l'antémémoire (320), pour des pages associées à un mode de recopie (Recopie), le moyen de gestion d'antémémoire mémorise les données modifiées dans la mémoire principale (140) aux adresses réelles (AdR) associées aux données modifiées.

5. Système informatique selon la revendication 3, dans lequel le moyen formant régisseur d'antémémoire comporte un moyen de détection d'accès de mémoire principale afin de détecter qu'un accès au moyen formant mémoire principale est réalisé par le premier élément de traitement de données.

6. Système informatique selon la revendication 5, dans lequel le moyen formant bus de système comporte un moyen de mémorisation de type cycle destiné à indiquer un type d'accès au moyen formant mémoire principale par le premier élément de traitement de données.

7. Système informatique selon la revendication 6, dans lequel ladite étiquette de système (EtS) indique, en outre, un attribut d'une pluralité d'attributs d'espace d'adresse.

8. Système informatique selon la revendication 7, dans lequel ladite pluralité d'attributs d'espace d'adresse comporte :

un attribut d'espace d'adresse partagée ;
un attribut d'espace d'adresse privée.

9. Système informatique selon la revendication 8, comprenant, en outre :

une mémoire de chargement de démarrage couplée audit bus de système (141) afin de mémoriser des pages de données ;
un dispositif d'entrée-sortie destiné à mémoriser des pages de données ;

dans lequel ladite pluralité d'attributs d'espace d'adresse comporte :

un espace d'adresse de mémoire de démarrage destiné à indiquer qu'une adresse virtuelle correspond à une page de données mémorisée dans ladite mémoire de démarrage ;
un attribut d'espace d'adresse d'E/S destiné à indiquer qu'une adresse virtuelle correspond à une page de données mémorisée dans ledit dispositif d'entrée-sortie ; et
un attribut d'espace d'adresse de mémoire principale destiné à indiquer qu'une adresse virtuelle correspond à une page de données mémorisée dans ladite mémoire principale.

10. Procédé de maintien de la cohérence d'antémémoire dans un système informatique comportant une antémémoire (320), un régisseur d'antémémoire, une pluralité de modes de mémorisation de données d'antémémoire (Ecr. Etend., Recopie), un bus de système (141), une mémoire principale (140), un premier élément de traitement de données couplé au bus de système (141) destiné à traiter des données à partir de la mémoire principale (140), et un second élément de traitement de données destiné à traiter des données à partir de la mémoire principale (140), comprenant les étapes de :

accès, de manière sélective, à la mémoire principale (140) par l'intermédiaire du bus de système (141) afin d'obtenir une entrée de table de page (ETP) dans lequel l'entrée de table de page (ETP) contient des données de conversion d'adresse virtuelle (AdV) en adresse réelle (AdR) et une étiquette de système (EtS) pour des pages de données dans la mémoire principale (140). ;
mémorisation dans un tampon de conversion des données de conversion d'adresse virtuelle (AdV) en adresse réelle (AdR) et de l'étiquette de système (EtS) ;

dans lequel l'étiquette de système (EtS) est un mode sélectionné d'une pluralité de modes de mémorisation de données d'antémémoire (Ecr.Etend., Recopie), qui comporte :

un mode d'écriture étendue (Ecr.Etend.), dans lequel, lorsque le second élément de traitement de données modifie des données présentant une adresse virtuelle (AdV) correspondant à une page de données associées à cette stratégie, les données modifiées sont mémorisées dans la mémoire principale (140) et l'antémémoire (320) ; et
un mode de recopie (Recopie) dans lequel, lorsque le second élément de traitement de données modifie des données présentant une adresse virtuelle (AdV) correspondant à une page de données associées à cette stratégie, les données modifiées sont mémorisées dans l'antémémoire (320) et non dans la mémoire principale (140) ;
conversion des adresses virtuelles (AdV) reçues à partir du second élément de traitement de données en adresses réelles (AdR) ;
mise en oeuvre de la stratégie d'actualisation de mémoire indiquée par l'étiquette de système (EtS) correspondant à la page de données associée au mode de mémorisation de données d'antémémoire (Ecr.Etend., Recopie) ; et
mise en cohérence des données partagées entre les premier et second éléments de traitement de données en surveillant l'activité sur des cycles du bus de système (141) afin de déterminer si des cycles sont du type qui peuvent affecter la cohérence de données ; et
détermination du fait que l'antémémoire (320) doit être effacée ou doit être délivrée au bus de système (141).

**11.** Procédé selon la revendication 10, dans lequel l'étape de mise en cohérence des données partagées comprend, en outre, l'étape de détection du fait qu'un accès à la mémoire principale (140) est réalisé par le premier élément de traitement de données.

**12.** Procédé selon la revendication 10, dans lequel l'étape de mise en cohérence des données partagées comprend, en outre, l'étape, en fonction du type de cycle, de détermination du fait qu'un emplacement de mémorisation dont l'accès est réalisé dans la mémoire principale (140) correspond aux données mémorisées dans l'antémémoire (320).

**13.** Procédé selon la revendication 12, dans lequel l'étape de mise en cohérence des données partagées comprend, en outre, l'étape, en fonction du type de cycle, d'actualisation ou d'invalidation de manière sélective des données mémorisées dans l'antémémoire (320) qui correspondent à l'emplacement de mémorisation de la mémoire principale (140) dont l'accès est réalisé lorsque le type de cycle est un cycle d'écriture.

**14.** Procédé selon la revendication 13, dans lequel l'étape de mise en cohérence des données partagées comprend, en outre, l'étape d'invalidation des données mémorisées dans l'antémémoire (320) qui correspondent à l'emplacement de mémorisation de la mémoire principale (140) dont l'accès est réalisé lors de l'écriture de la totalité de ligne d'antémémoire.

**15.** Procédé selon la revendication 14, dans lequel l'étape de mise en cohérence des données partagées comprend, en outre, l'étape d'actualisation des données mémorisées dans l'antémémoire (320) qui correspondent à l'emplacement de mémorisation de la mémoire principale (140) dont l'accès est réalisé lors de l'écriture de moins de la totalité de la ligne d'antémémoire.

**16.** Procédé selon la revendication 15, dans lequel l'étape de mise en cohérence des données partagées comprend, en outre, l'étape, en fonction du type de cycle, de couplage des données mémorisées dans l'antémémoire (320), qui correspondent à l'emplacement de mémorisation de la mémoire principale (140) dont l'accès est réalisé, sur le bus de système (141) lorsque le type de cycle est un cycle de lecture,

**17.** Procédé selon la revendication 16, dans lequel l'étape de mise en cohérence de données partagées comprend, en outre, l'étape de couplage des données mémorisées dans l'antémémoire (320), qui correspondent à l'emplacement de mémorisation de la mémoire principale (140) dont l'accès est réalisé, sur le bus de système (141) uniquement lorsque les données d'antémémoire ont été modifiées par le second élément de traitement de données depuis que les données d'antémémoire ont été mémorisées dans l'antémémoire (320).

**18.** Procédé selon la revendication 17, dans lequel l'étape de mise en cohérence de données partagées comprend, en outre, l'étape consistant à empêcher le couplage des données avec le bus de système (141) à partir de la mémoire principale (140) lorsque le régisseur d'antémémoire assure le couplage de données, qui correspondent à l'emplacement de mémorisation de la mémoire principale dont l'accès est réalisé, avec le bus de système (141).

**19.** Procédé selon la revendication 10, dans lequel la pluralité de modes de mémorisation de données d'antémémoire comporte un mode de mémorisation non géré en antémémoire dans lequel des données présentant une adresse virtuelle (AdV) correspondant à une page de données associée à ce mode de mémorisation ne sont pas mémorisées dans l'antémémoire (320).

**20.** Procédé selon la revendication 19, dans lequel l'étape de mise en cohérence des données partagées comprend, en outre, les étapes consistant à :

déterminer si les données à l'intérieur de l'antémémoire (320) correspondent à l'emplacement de mémorisation de la mémoire principale (140) dont l'accès est réalisé pour des accès à un espace de mémoire pouvant être géré en antémémoire ; et
empêcher la détermination pour des accès à un espace de mémoire non géré en antémémoire.

_FIG_1_

_FIG_2_

_FIG_3_

FIG.4.

FIG_5

FIG_6_

IR BUS

111

110

CPU

131    121

D-BUS    SSW    I-BUS

115

D-CAMMU    I-CAMMU

130    120

133

T²L DRV    135

141

SYSTEM BUS

FIG_7A_

VIRTUAL MEMORY

VA: ∅∅∅∅∅∅∅∅

4G Byte

$2^{31}$

VM: $2^{10}$ Segments
SEG: $2^{10}$ Pages
Page: $2^{12}$ Bytes

FIG_7B_

REAL MEMORY

RA: ∅∅∅∅∅∅

16M Byte    $2^{24}$

RM: $2^{12}$ Pages

FIG_7C_

—10—  —10—  —12—

VA:  | SEG adr | Page adr | displacement |

EP 0 732 656 B1

adr. input reg.

AIR
210

VA(virtual adr) 211

261 RA(real adr)

Cache Bus

121or131

Cache output reg.

220

CACHE
Memory Subsystem

RA
(real adr)

270

TLB
Subsystem

280

DAT

direct adr. translation

System bus Input reg.

260

SIR

COR
230

DO(data out)

231

246

Data

242

RA

243

RA

244

250

SOR

SYSTEM BUS

141

Cache input reg.

CIR
240

241

DT
(data bus)

system bus output reg.

CPU I/F

*FIG_8_*

EP 0 732 656 B1

*Fig_9_*

_320_

$FIG 10A$

329

| | 321 W | 323 X |

128 Lines

$FIG 10B$

| | RA | DTØ | DTI | DT2 | DT3 | I Line |

LD
LV
E

RA = 21 bits
DT = 32 bits
E = 1 bit
LV = 1 bit
LD = 1 bit

$FIG 11A$

350

359

| | 352 W | 354 X |

64 Lines

$FIG 11B$

| VA | RA | ST | PL | I Line |

SV UV    D R

VA = 14 bits
RA = 20 bits
ST = 5 bits
PL = 4 bits
SV = 1 bit
UV = 1 bit
D = 1 bit
R = 1 bit

## FIG.12

add | Quad-word boundary
3 2 1 0

← Quad-word boundary

| Address | |
|---|---|
| 100 | |
| 104 | |
| 108 | |
| 10C | ← " |
| 110 | |
| 114 | |
| 118 | |
| 11C | ← " |
| 120 | |
| 124 | |
| 128 | |
| 12C | ← " |

## FIG.13

| PAGE0 | VECTORS | 0000 0000 |
|---|---|---|
| PAGE1 | | |
| PAGE2 | | |
| PAGE3 | | |
| PAGE4 | MM IO | |
| PAGE5 | MM IO | |
| PAGE6 | BOOT ROM | |
| PAGE7 | BOOT ROM | |
| | | |
| PAGE 1,048,575 | | FFFFFFFF |

| VIRTUAL PAGE NO. | VIRTUAL ADD | REAL ADD | ST |
|---|---|---|---|
| 0 | 00000XXX | 00000XXX | 00IXX |
| 1 | 00001XXX | 00001XXX | 00IXX |
| 2 | 00002XXX | 00002XXX | 00IXX |
| 3 | 00003XXX | 00003XXX | 00IXX |
| 4 | 00004XXX | 00000XXX | IX0XX |
| 5 | 00005XXX | 00001XXX | IX0XX |
| 6 | 00006XXX | 00000XXX | IXIXX |
| 7 | 00007XXX | 00001XXX | IX7XX |

49

$\mathit{FIG\_14}$

Cache
Memory
Subsystem

320

32

Line Register — 400

230

C
O
R

32

QB=Ø

410

Processor/Cache
Bus

32

Quad-Word Line Boundary Register
( AIR 2)

Adr
Reg
(AIR1)

VA

210

Quad Boundary
Comparator — 420

Quad
Boundary

Control Logic

430

FIG.15.

LOAD

Within QUAD BOUNDARY on QUAD BOUNDARY

FIG.16.

STORE

EP 0 732 656 B1

# FIG_17A_

410

CPU

Copyback

412 — CA    m'

Main Memory 414

Private Page

m

(fast Write Operation)

# FIG_17B_

410

CPU

W. Thru

412

CA    m'

Shared Page

m'

(Data Consistancy)

# FIG_18_

512

Cache Memory Subsystem

Copy Back

②B

Fetch

③B

510

CPU

data

③ load data

③ Store

CB+WTh

WTh

514

①

VA

TLB Memory Subsystem

②

RA

Memory

516

DAT Operation

FIG. 19

PF = PAGE FAULT
PL = ACCESS PROTECTION
ST = SYSTEM TAGS
D = DIRTY FLAG
R = REFERENCED FLAG

Fig_20_

EP 0 732 656 B1

COR : CACHE OUTPUT REG.
CIR : CACHE INPUT REG.
AIR : ADDRESS INPUT REG.
FC : FUNCTION CODE REG.
TRAP : TRAP CODE ENCODER
RMW : READ MODIFIED WRITE LOGIC
QR : QUAD-WORD REG.
CMP : COMPARATOR

SIR    SYSTEM INPUT REG.
SIR$_A$  SYSTEM ADDRESS REG.
SOR    SYSTEM OUTPUT REG.
STO    SEG. TABLE ORIGINE REG.
       s   supervisor
       u   user
F      Fault Address REG.
E      Error Address REG.

*FIG 21*

EP 0 732 656 B1

FIG_22